# NEUE EUROPÄISCHE PATENTSCHRIFT

(11) **EP 1 420 186 B2**
(45) Veröffentlichungstag und Bekanntmachung des Hinweises auf die Entscheidung über den Einspruch: **01.06.2016**
(45) Hinweis auf die Patenterteilung: 18.02.2009
(21) Anmeldenummer: 03026156.4
(22) Anmeldetag: 14.11.2003
(51) Int. Cl.: F16D 25/12

(54) **Kraftfahrzeug- Antriebsstrang mit einer Pumpenanordnung zur Versorgung einer Kupplungseinrichtung mit Druckmedium**
Vehicle drive train comprising a pumping arrangement in order to supply a clutch device with a pressurised fluid
Transmission pour véhicule automobile comprenant une pompe d'alimentation d'un système d'embrayage en fluide sous pression

(30) Priorität: 18.11.2002 DE 10253658; 18.11.2002 DE 10253663; 26.02.2003 DE 10308296; 09.04.2003 DE 10316215
(43) Veröffentlichungstag der Anmeldung: 19.05.2004
(73) Patentinhaber: ZF Friedrichshafen AG, 80846 Friedrichshafen (DE)
(72) Erfinder: Busold, Thomas Dipl.-Ing., 36039 Fulda (DE); Grosspietsch, Wolfgang Dipl.-Ing. (FH), 97422 Schweinfurt (DE); Steiner, Eduard Dipl.-Ing. (FH), 97072 Würzburg (DE); Moseler, Olaf Dr., 97070 Würzburg (DE)

(56) Entgegenhaltungen:
- EP-A- 1 150 040
- EP-A- 1 253 341
- WO-A-03/040580
- DE-A- 10 056 954
- DE-A- 10 216 002
- DE-A1- 4 208 060
- DE-A1- 10 041 386
- DE-A1- 10 041 493
- DE-C1- 4 117 736
- GB-A- 2 367 866
- US-B1- 6 308 812
- FLEGL H. ET AL: 'Das Porsche-Doppelkupplungs-(PDK-)Getriebe' ATZ AUTOMOBILTECHNISCHE ZEITSCHRIFT 89 1987, Seiten 439 - 452
- RÖSCH R. ET AL: 'Das neue Automatische Getriebe W5A 330/580 für Personenwagen von Mercedes Benz. Elektrohydraulische Steuerung und äußere Schaltung' ATZ 97 Bd. 10, 15 März 1995, Seiten 1 - 16

## Beschreibung

Die Erfindung betrifft einen Kraftfahrzeug-Antriebsstrang, umfassend eine Antriebseinheit, ein Getriebe und ein Kupplungssystem mit einer zwischen der Antriebseinheit und dem Getriebe angeordneten Kupplungseinrichtung zur Momentenübertragung zwischen der Antriebseinheit und dem Getriebe, wobei die Kupplungseinrichtung wenigstens eine unter Vermittlung von Druckmedium betätigbare, für einen Betrieb unter Einwirkung eines Betriebsmediums vorgesehene Kupplungsanordnung aufweist, wobei auf Grundlage einer Pumpenanordnung i) das Druckmedium für die Betätigung der Kupplunganordnung bereitstellbar ist und ii) der Kupplungseinrichtung für den Betrieb unter Einwirkung des Betriebsmediums Betriebsmedium zuführbar ist.

Derartige Antriebsstränge, Kupplungseinrichtungen und Pumpenanordnungen sind beispielsweise aus der DE 100 56 954 A1 und DE 101 02 874 A1 bekannt.

GB 2 367 866 offenbart einen Kraftfahrzeug-Antriebsstrang gemäß dem Oberbegriff des Anspruchs 1. Betreffend das angesprochene Kupplungssystem wird insbesondere an ein Nasslauf-Doppelkupplungsystem mit zwei nasslaufenden Lamellen-Kupplungsanordnungen gedacht, die unter Vermittlung von in die Kupplungseinrichtung integrierten Nehmerzylindern auf hydraulischem Wege betätigbar sind. Bei der Kupplungseinrichtung kann es sich beispielsweise um eine Kupplungseinrichtung gemäß einer Konstruktion der Anmelderin handeln, wie sie in der deutschen Offenlegungsschrift DE 100 04 179 A1 beschrieben ist, deren Offenbarung ebenfalls durch Bezugnahme in die Offenbarung der vorliegenden Anmeldung einbezogen wird.

Ein derartiges Nasstauf-Doppelkupplungssystem benötigt zur Betätigung der Lamellen-Kupplungsanordnungen einen kleinen Volumenstrom an Druckmedium bei hohem Druck und zur Kühlung der Reibbeläge bzw. Lamellen einen vergleichsweise großen Volumenstrom an Betriebsmedium (Kühlmedium) bei vergleichsweise geringem Druck. Gegenüber herkömmlichen Lösungen mit einer von der Antriebseinheit mechanisch angetriebenen Pumpe, die stets (mangels Steuerbarkeit bzw. Regelbarkeit unabhängig von der Drehzahl der Antriebseinheit) einen der momentanen Drehzahl der Antriebseinheit entsprechenden Volumenstrom bzw. Abgabedruck bereitstellt, hat die Anmelderin bisher in diesem Zusammenhang aus energetischen Gründen vorrangig den Ansatz favorisiert, für jeden Volumenstrom eine eigene abgestimmte Pumpenanordnung (Pumpe) zu verwenden (vgl. die genannten deutschen Offenlegungsschriften DE 100 56 954 A1 und DE 101 02 874 A1). In diesem Zusammenhang wurde unter anderem an elektromotorisch angetriebene Pumpen gedacht. Es hat sich nun aber gezeigt, dass bei besonders leistungs- bzw. drehmomentstarken Antriebseinheiten (Motoren) der Kühlölbedarf der Kupplungseinrichtung unter Umständen so groß sein kann, dass der Einsatz eines Elektromotors zum Antreiben einer elektromotorischen Pumpe zum Kühlen der Kupplungseinrichtung bzw deren wenigstens einen Kupplungsanordnung aufgrund zu großen, durch die erforderliche Pumpenleistung bedingten Bauraumbedarfs nachteilig ist und unter Umständen nicht mehr praktikabel bzw. tragbar ist. Ferner hat sich gezeigt, dass bei den bisherigen Lösungen zur Erreichung eines möglichst guten Wirkungsgrads durchaus noch einiger Entwicklungsaufwand mit entsprechenden Kosten nötig ist und auch durchaus beachtliche Fertigungskosten zu tragen sind. Auch werden bei einer optimalen Lösung auf Grundlage der bisherigen Ansätze vergleichsweise viele Bauteile benötigt, z. B. Hydrospeicher. Eine Rückkehr zu der herkömmlichen Lösung mit einer einfachen, durch die Antriebseinheit permanent angetriebenen Pumpe ohne Steuerbarkeit/Regelbarkeit des abgegebenen Drucks bzw. des abgegebenen Volumenstroms kommt aus verschiedenen Gründen aber nicht in Betracht. So führt ein nicht bedarfsangepasster, zu großer Kühlölvolumenstrom zu ungewünschten Schleppmomenten in einer nasslaufenden Lamellen-Kupplungsanordnung. Ferner ist die Gefahr von zu hohen Drücken zu gegenwärtigen, die zu Beschädigungen führen können. Ferner spielt der Wirkungsgrad bzw. der Energieverbrauch eine nicht unwichtige Rolle. Es wurde nun aber erkannt, dass man auch im Falle einer durch die Antriebseinheit permanent angetriebene bzw. antreibbaren Pumpe mittels einer zugeordneten Steuer/Regel-Ventilanordnung eine Steuerbarkeit bzw. Regelbarkeit des wirksamen Abgabedrucks oder/und des wirksamen Abgabe-Volumenstroms der Pumpe erreichen kann, ohne dass hierzu ein übermäßiger mechanischer und ansteuerungsmäßiger Aufwand erforderlich ist.

Vor diesem Hintergrund schlägt die Erfindung einen Kraftfahrzeug-Antriebsstrang gemäß den Merkmalen des Anspruchs 1 vor.

Wie bereits ausgeführt, sieht eine vorteilhafte Ausgestaltung der Erfindung vor, dass die Pumpenanordnung wenigstens eine vorzugsweise durch die Antriebseinheit antreibbare Pumpe umfasst.

Die Anpassung des Mediumdrucks bzw. Medium-Volumenstroms an den momentanen Bedarf erfolgt erfindungsgemäß durch Rückführung von Medium von der Ausgangsseite zur Eingangsseite der Pumpe. Es braucht damit keine Pumpe eingesetzt werden, die selbst steuerbar ist, und man kann auch darauf verzichten, elektromotorische Pumpen einzusetzen. Es ergeben sich gegenüber bisherigen Ansätzen große Kostenvorteile. Insgesamt kann beispielsweise eine vergleichsweise einfache und preiswerte Hydraulikversorgung bzw. Kühlölversorgung für etwa eine nasslaufende Lamellen-Kupplung, ggf. Lamellen-Doppelkupplung, bzw. eine hydraulisch betätigbare Kupplung sowie ggf. für ein Getriebe (etwa Automatgetriebe oder automatisiertes Getriebe) bereitgestellt werden. Betreffend die letztgenannte Einsatzmöglichkeit ist darauf hinzuweisen, dass bei Automatgetrieben in der Regel herkömmlich eine dem Automatgetriebe zugeordnete eigene Pumpe verwendet wird, wobei die benötigten Druckniveaus durch verschiedene Druckminderventile bereitgestellt werden.

Wenn hier von einer Rückführung von Medium von der Eingangsseite zur Ausgangsseite der Pumpe die Rede ist, so schließt dies auch die Möglichkeit ein, dass das Medium in ein Mediumreservoir, beispielsweise in eine Ölwanne, zurückgeführt wird, aus der die Pumpe, ggf. über einen Saugfilter, das Medium ansaugt. Demgegenüber ist es aber bevorzugt, dass - insbesondere im Falle der Verwendung eines Saugfilters - das Medium unmittelbar zum Ansauganschluss der Pumpe zurückgeführt wird, so dass - wenn vorgesehen - das rückgeführte Medium den Saugfilter nicht noch einmal passieren muss und insoweit ein besserer energetischer Wirkungsgrad erreicht werden kann.

Ferner wird vorgeschlagen, dass die einen ausgangsseitigen Mediumdruck an einem Steuereingang empfangende Steuer/Regel-Ventilanordnung als Druckbegrenzungsventil betreibbar ist.

Es wurde schon ausgeführt, dass das Getriebe des Antriebsstrangs vermittels der Pumpenanordnung mit im Betrieb benötigten Medium, insbesondere Druckmedium, versorgt wird. Bei dem Getriebe kann es sich um ein Automatgetriebe oder um ein automatisiertes Getriebe, im Falle einer Doppel-Kupplungseinrichtung speziell um ein Doppelkupplungsgetriebe, handeln. Es wird in diesem Zusammenhang speziell daran gedacht, dass das Getriebe mittels einer zugeordneten Aktuatorik unter Vermittlung von Druckmedium betätigbar ist und dass auf Grundlage der Pumpenanordnung das Druckmedium für die Betätigung des Getriebes bereitstellbar ist.

Weiterbildend wird vorgeschlagen, dass die Druckmediumpumpe dafür ausgelegt ist, einen momentanen Haltedruck zum Halten eine momentanen Betätigungszustands der Kupplungsanordnung bereitzustellen, erforderlichenfalls unter Ausgleich etwaiger Druckmediumverluste durch Nachförderung von Druckmedium, und dass die Kupplungsanordnung auf Grundlage von durch die Betriebsmediumpumpe bereitgestelltem Betriebsmedium, das als Druckmedium für die Kupplungsbetätigung und ggf. für die Getriebebetätigung dient, von einem unbetätigten in einen betätigten Zustand überführbar ist.

Die Steuer/Regel-Ventilanordnung bzw. die der der Druckmediumpumpe zugeordnete Steuer/Regel-Ventilanordnung oder/und die der Betriebsmediumpumpe zugeordneten Steuer/Regel-Ventilanordnung, kann wenigstens ein elektrisch oder - vorzugsweise - auf Grundlage eines daran anliegenden Steuer/Regeldrucks ansteuerbares Steuer/Regel-Ventil umfassen. Es wird in diesem Zusammenhang nach einem Ansatz vorgeschlagen, dass ein ausgangsseitiger Mediumdruck, insbesondere der Druckmediumdruck bzw. Betriebsmediumdruck auf der Ausgangsseite oder an der Abgabestelle der Druckmediumpumpe bzw. Betriebsmediumpumpe, an dem bzw. an einem Steuer/Regel-Ventil als Steuer/Regeldruck angelegt oder anlegbar ist, um den Volumenstrom oder/und Druck des Mediums, insbesondere Druckmediums bzw. Betriebsmediums, zu steuern oder zu regeln. Ferner wird in diesem Zusammenhang nach einem anderen Ansatz vorgeschlagen, dass aus einem ausgangsseitigen Mediumdruck, insbesondere aus dem Druckmediumdruck auf der Ausgangsseite oder an der Abgabestelle der Druckmediumpumpe, mittels wenigstens eines weiteren, elektrisch ansteuerbaren Steuer/Regel-Ventils der Steuer/Regeldruck erzeugbar ist, der an dem bzw. an einem Steuer/RegelVentil angelegt oder anlegbar ist, um den Volumenstrom oder/und Druck des Mediums, insbesondere den Volumenstrom des Betriebsmediums bzw. den Druck des Druckmediums, zu steuern oder zu regeln.

In der Regel wird es sinnvoll sein, eine Druckbegrenzungsfunktion vorzusehen. Nach einem Ansatz wird hierzu vorgeschlagen, dass ein ausgangsseitiger Mediumdruck, insbesondere der Druckmediumdruck bzw. Betriebsmediumdruck auf der Ausgangsseite oder an der Abgabestelle der Druckmediumpumpe bzw. Betriebsmediumpumpe, an dem bzw. an einem Steuer/Regel-Ventil als Steuer/Regeldruck angelegt oder anlegbar ist, um die Druckbegrenzungsfunktion durch bedarfsweises Öffnen der Verbindung zwischen der Eingangsseite und der Ausgangsseite vorzusehen.

Nach einem anderen Ansatz wird vorgeschlagen, dass wenigstens ein Druckbegrenzungsventil vorgesehen ist, über das bedarfsweise eine Rückführverbindung zwischen Eingangsseite und Ausgangsseite freigebbar ist, um die Druckbegrenzungsfunktion vorzusehen.

Es kann vorteilhaft wenigstens ein ausgangsseitig der Pumpenanordnung angeordneter Drucksensor vorgesehen sein, der vorteilhaft in die Pumpeneinheit integriert sein kann.

Es wurde schon angesprochen, dass die Kupplungsanordnung eine nasslauferide Kupplungsanordnung sein kann. In diesem Fall ist der Betrieb unter Einwirkung des Betriebsmediums ein nasslaufender Betrieb und das Betriebsmedium eine Betriebsflüssigkeit, ggf. Kühlflüssigkeit. Die Kupplungsanordnung kann als Lamellen-Kupplungsanordnung ausgebildet sein.

Wie schon erwähnt, kann die Kupplungseinrichtung als Mehrfach-Kupplungseinrichtung, insbesondere Doppel-Kupplungseinrichtung, ausgeführt sein. Es wird in diesem Zusammenhang insbesondere daran gedacht, dass die Kupplungseinrichtung eine erste Kupplungsanordnung, der wenigstens ein erster Nehmerzylinder zugeordnet ist, und eine zweite Kupplungsanordnung, der wenigstens ein zweiter Nehmerzylinder angeordnet ist, aufweist, wobei den beiden Nehmerzylindern unabhängig voneinander von der Pumpenanordnung bereitgestelltes Medium als Druckmedium zuführbar ist.

Die Erfindung wird im Folgenden anhand von in den Figuren gezeigten Beispielen näher erläutert.
- Fig. 1 bis 9: zeigen Beispiele von Pumpenanordnungen mit zugehörigen Ventilanordnungen, die einerseits zur Druckölversorgung und andererseits zur Kühlölversorgung etwa im Zusammenhang mit einer nasslaufenden, hydraulisch betätigbaren Kupplungseinrichtung sowie ggf. einem hydraulisch betätigbaren Getriebe einsetzbar sind, ggf. als Teil eines erfindungsgemäßen Antriebsstrangs.
- Fig. 10 bis 14: zeigen nicht erfindungsgemäße Beispiele für einer nasslaufenden, hydraulisch betätigbaren Doppelkupplungseinrichtung und einem hydraulisch betätigbaren Doppelkupplungsgetriebe zugeordnete Hydrauliksysteme.
- Fig. 15: zeigt ein nicht erfindungsgemäßes Beispiel für ein einer nasslaufenden, hydraulisch betätigbaren Doppelkupplungseinrichtung und einem hydraulisch betätigbaren Doppelkupplungsgetriebe zugeordnetes Hydrauliksysteme.
- Fig. 16: zeigt ein weiteres nicht erfindungsgemäßes Beispiel für ein einer nasslaufenden, hydraulisch betätigbaren Doppelkupplungseinrichtung und einen hydraulische betätigbaren Doppelkupplungsgetriebe zugeordnetes Hydrauliksystem.
- Fig. 17 bis 20: zeigen Beispiele für eine nicht erfindungsgemäße Betätigungsanordnung zur Betätigung eines Doppelkupplungsgetriebes.
- Fig. 21 bis 27: zeigen Beispiele für einer nasslaufenden, hydraulisch betätigbaren Doppelkupplungseinrichtung und einem hydraulisch betätigbaren Doppelkupplungsgetriebe zugeordnete nicht erfindungsgemäßen Hydrauliksysteme.

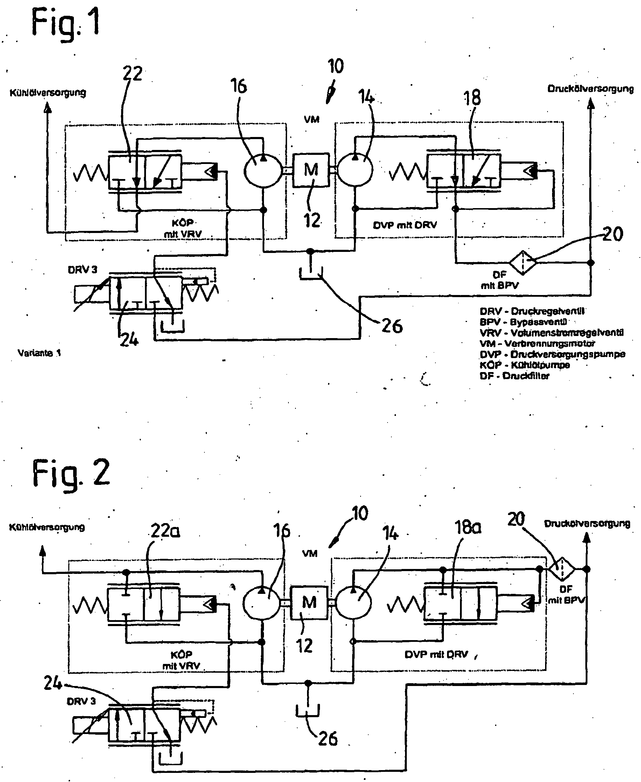

Ein Beispiel eines Kraftfahrzeug-Antriebsstrangs umfasst eine Antriebseinheit, beispielsweise eine Brennkraftmaschine, ein Doppetkupplungssystem und ein Doppelkupplungsgetriebe oder Lastschaltgetriebe, wobei das Doppelkupplungssystem eine zwischen der Antriebseinheit und dem Getriebe angeordnete Doppelkupplungseinrichtung aufweist, die zwei hydraulisch betätigbare nasslaufende Lamellen-Kupplungsanordnungen umfasst, die jeweils einer eigenen Getriebeeingangswelle zugeordnet sind. Zur Bestätigung der Doppelkupplungseinrichtung wird ein Druckmedium, ein hydraulisches Drucköl, auf einem bestimmten Druckniveau benötigt. Ferner ist im Betrieb den Lamellen-Kupplungsanordnungen ein Betriebsmedium, beispielsweise ein Kühlöl, zuzuführen, wobei als Kühlöl das Hydrauliköl verwendbar ist. Zur Bereitstellung des Kühlöls und des Drucköls können beispielsweise die Pumpenanordnungen der Fig. 1 bis 9 dienen. Die Pumpenanordnungen in den Fig. 1 bis 9 können ferner auch dazu dienen, Drucköl für die Betätigung des Getriebes, wenn dieses hydraulisch betätigbar ist, bereitzustellen. Die Pumpenanordnungen der Fig. 1 bis 9 können aber durchaus auch in anderem Zusammenhang vorteilhaft einsetzbar sein.

Den Beispielen der Fig. 1 bis 9 ist gemeinsam, dass die jeweilige Pumpenanordnung 10 zwei durch einen Motor, vorliegend den Verbrennungsmotor 12 des Antriebsstrangs, angetriebene Pumpen 14 und 16 umfasst. Die Pumpe 14 ist dafür ausgebildet, Drucköl auf einem vergleichsweise hohem Druckniveau bereitzustellen, das ausreicht, die Kupplungseinrichtung zu betätigen. Die Pumpe 16 ist dafür ausgebildet, einen vergleichsweise großen Volumenstrom an als Kühlöl dienendem Öl bereitzustellen, in der Regel auf einem gegenüber dem Druckniveau des Drucköls niedrigerem Druckniveau. Eine besonders bevorzugte Ausgestaltung der Pumpenanordnung 10 zeichnet sich dadurch aus, dass die beiden Pumpen 14 und 16 eine als Einheit handhabbare Pumpeneinheit bilden. Hierzu weisen die beiden Pumpen eine gemeinsame Antriebswelle auf, über die die beiden Pumpen durch den Verbrennungsmotor 12 angetrieben werden können. Die beiden Pumpen können ein gemeinsames Pumpengehäuse aufweisen und einen gemeinsamen Ansaugtrakt bzw. eine gemeinsame Ansaugleitung besitzen. Die im Folgenden näher beschriebenen Ventile, die zur Steuerung bzw. Regelung des Volumenstroms bzw. Abgabeöldrucks dienen, können ebenfalls Bestandteil der Pumpeneinheit sein, beispielsweise ins Pumpengehäuse integriert sein.

Gemäß Fig. 1 ist der Druckölpumpe 14 ein 3/2-Wege-Druckregelventil 18 zugeordnet, das auf einer Seite mit einer Federkraft beauftragt ist und auf der anderen Seite mit dem Systemdruck (Drucköldruck) beaufschlagt wird. In Abhängigkeit von der Stellung des Ventilschiebers wird ein Teil des von der Druckölpumpe 14 geförderten Öls zur Eingangsseite der Druckölpumpe 14 zurückgeführt. Das Druckregelventil 18 regelt so einen konstanten Systemdruck für die Druckölversorgung ein.

Gemäß dem Beispiel wird das für die Systemdruckversorgung bereitgestellte Drucköl nach dem Ventil 18 durch einen Druckfilter 20 geleitet, so dass nachfolgende Bauteile von möglichen Verschmutzungen geschützt sind. Alternativ oder zusätzlich könnte man auch einen Saugfilter in der Ansaugleitung vorsehen, wobei die Rückführung des Drucköls durch das Regelventil 18 zur Eingangsseite der Pumpe 14 vorzugsweise stromaufwärts des Saugfilters erfolgen würde, so dass das rückgeführte Drucköl den Saugfilter nicht noch einmal passieren muss.

Die Steuerung bzw. Regelung des Kühlölvolumenstroms erfolgt mittels eines 3/2-Volumenstromregelventils 22, das über ein 3/2-Wege-Druckregelventil 24 vorgesteuert wird, indem das Ventil 22 mit gegen die Federvorspannung des Ventilschiebers wirkenden Ansteuerdrücken beaufschlagt wird. Als Eingangsdruck für das Ventil 24 dient der Systemdruck für die Druckölversorgung. Gemäß der in Fig. 1 gezeigten Stellung des Ventils 24 liegt kein Steuerdruck am Ventil 22 an, so dass dieses einen maximalen Kühlölvolumenstrom durchlässt. Es wird also beispielsweise das gesamte von der Pumpe 16 geförderte Öl durch einen Kühler bzw. durch die Kupplungseinrichtung zur Kühlung der Kupplungsanordnungen gefördert. Wird durch entsprechende elektrische Ansteuerung des Ventils 24 der Steuerdruck auf den Schieber des Ventils 22 erhöht, so führt das Ventil 22 eine zunehmende Menge an Kühlöl zurück in den Ansaugtrakt der Pumpe 16. Abgabeseitig des Ventils 22, also auf der Kühlölversorgungsseite, kann ebenfalls ein Ölfilter in der Art des Filters 20 vorgesehen sein. Alternativ oder zusätzlich kann ein Ansaugfilter auf der Eingangsseite der Pumpe 16 vorgesehen sein, wobei vorzugsweise das durch das Ventil 22 rückgeführte Kühlöl stromaufwärts des Saugfilters zuströmt und dementsprechend den Saugfitter nicht noch einmal passieren muss. Vorteilhaft kann für die beiden Pumpen 14 und 16 ein gemeinsamer Saugfilter verwendet werden.

Erwähnt werden sollte, dass es aber durchaus auch in Betracht kommt, das durch das Ventil 18 bw Ventil 22 rückgeführte Drucköl bzw. Kühlöl nicht direkt zur Eingangsseite bzw. in den Ansaugtrakt der betreffenden Pumpe zurückzuführen, sondern in das Ölreservoir 26, ggf. den Ölsumpf 26, aus dem die Pumpen 14 und 16 ansaugen.

Fig. 2 zeigt eine Ausführungsvariante, bei der zur Steuerung/Regelung des Drucks bzw. des Volumenstroms anstelle der 3/2-Wege-Ventile 18 und 22 etwas kostengünstigere 2/2-Wege-Ventile 18a und 22ä eingesetzt sind. Ansonsten entspricht die Anordnung der Fig. 2 der Anordnung der Fig. 1.

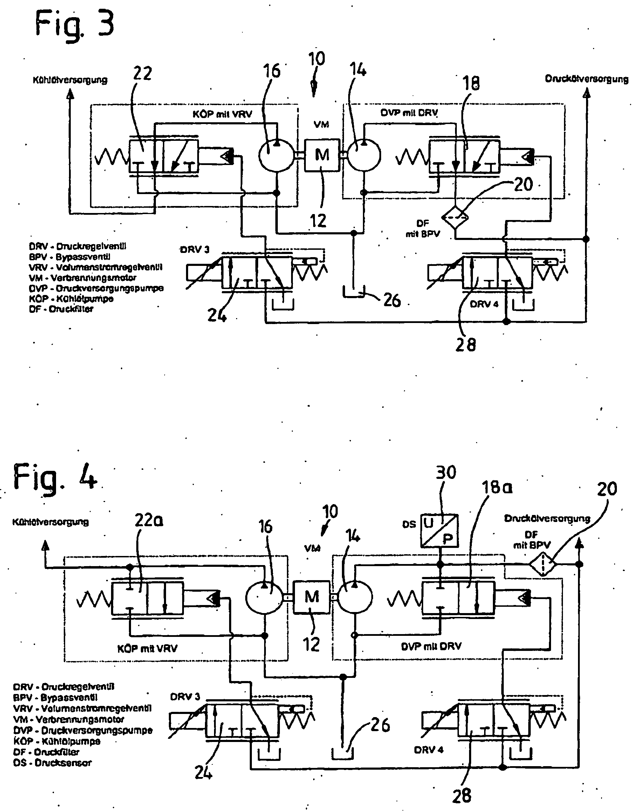

Fig. 3 zeigt eine Ausführungsvariante, die im Wesentlichen dem Beispiel der Fig. 1 entspricht, bei der aber auch für das 3/2-Wege-Druckregelventil 18 eine Vorsteuerung mittels eines elektrisch ansteuerbaren 3/2-Wege-Druckregelventils 28 vorgesehen ist, so dass der sich einstellende Systemdruck durch entsprechende Ansteuerung des Ventils 28 wählbar ist. Dies ist insbesondere deswegen sinnvoll, um den Systemdruck an einen momentan gerade benötigten Systemdruck anzupassen und so den Wirkungsgrad zu verbessern. Die schon gemäß Fig. 1 vorgesehene Einstellbarkeit des Kühlölvolumenstroms über entsprechende Ansteuerung des Ventils 24 ist insoweit besonders sinnvoll, als dass durch im Übermass zugeführtes Kühlöl entstehende Schleppmomente in der Kupplungseinrichtung vermeidbar sind. Auch energetisch ist es vorteilhaft, nur gerade so viel Kühlöl zuzuführen, wie momentan aus thermischen Gründen benötigt wird.

Fig. 4 zeigt eine Ausführungsvariante, bei der - ähnlich wie bei Fig. 3 - die 3/2-Wege-Ventile 18 und 22 durch kostengünstigere 2/2-Wege-Ventile 1 8a und 22a ersetzt sind. Zusätzlich ist noch ein Drucksensor 30 auf der Abgabeseite der Pumpe 14 vorgesehen. Der Drucksensor 30 ermöglicht die exakte Messung des Versorgungsdrucks und ermöglicht eine genauere Einstellung des Druckniveaus durch entsprechende Ansteuerung des Ventils 28 und damit entsprechende Druckbeaufschlagung des Schiebers des Ventils 18a. Es kann insbesondere ein Druckregelkreis umfassend die Ventile 28, 18a und umfassend den Sensor 30, realisiert serin. Dies ist insoweit vorteilhaft, als dass die Ventile eine gewisse Hysterese aufweisen und eine reine Steuerung für manche Anwendungen zu ungenau ist. Ein entsprechender Drucksensor kann auch beim Beispiel der Fig. 3 vorteilhaft eingesetzt werden.

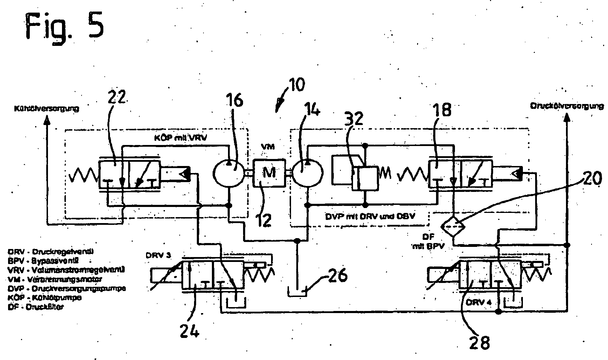

Das Beispiel der Fig. 5 entspricht weitgehend dem Beispiel der Fig. 3. Zur Systemdruckbegrenzung ist zusätzlich noch ein Druckbegrenzungsventil 32 parallel zum Druckregelventil 18 zwischen Eingangsseite und Ausgangsseite der Druckölpumpe 14 geschaltet, so dass auch im Falle eines Ausfalls der Ventile 18 und 28 der maximal zulässige Systemdruck abgesichert ist.

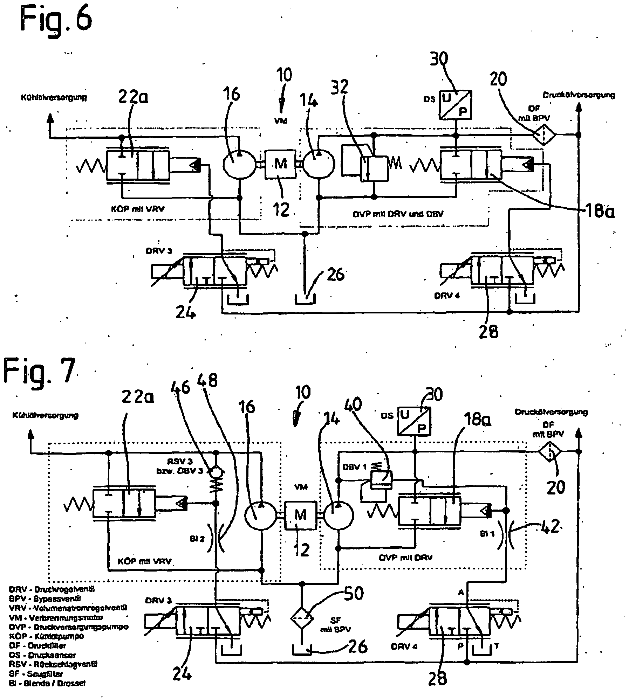

Das Beispiel der Fig. 6 entspricht im Wesentlichen dem Beispiel der Fig. 5. Zusätzlich ist noch ein Drucksensor 30 wie beim Beispiel der Fig. 4 vorgesehen. Mithilfe dieses Sensors lässt sich der Versorgungsdruck exakt messen und das Druckregelventil 18a über das Druckregelventil 28 genauer ansteuern. Es sei angemerkt, dass ein derartiger Drucksensor 30 auch beim Beispiel der Fig. 5 vorgesehen sein könnte.

Ein weiterer Unterschied zwischen Fig. 5 und Fig. 6 ist, dass die 3/2-WegeVentile 18 und 22 wiederum durch 2/2-Wegeventile 18a und 22a ersetzt sind.

Das Beispiel der Fig. 7 lässt sich zweckmäßig ausgehend vom Beispiel der Fig. 4 erläutern. Gegenüber dem Beispiel der Fig. 4 ist auf der Druckölversorgungsseite zusätzlich ein Druckbegrenzungsventil 40 eingebaut, das den Druckausgang der Druckölpumpe 14 mit dem Steuereingang des Druckregelventils 18a verbindet. Das Druckbegrenzungsventil 40 hat die Aufgabe, im Falle eines zu hohen Systemdrucks zu öffnen und einen entsprechenden Druck am Steuereingang des Ventils 18a anzulegen, so dass der Schieber des Druckregelventils 18a so betätigt wird, dass das Druckregelventil 18a die Ausgangsseite mit der Eingangsseite der Pumpe 14 verbindet und so den zu hohen Druck abbau Um ein Abfließen des über das Druckbegrenzungsventil 40 im Auslösefall in Richtung zum Steuereingang des Ventils 18a fließenden Öls über das Ventil 28 in das Ölreservoir zu verhindern, ist eine Blende oder Drossel 42 zwischen dem Steuereingang des Ventils 28a und dem Ventil 28 eingebaut. Die Blende oder Drossel 42 und das Ventil 28 sollten gemeinsam einen höheren Strömungswiderstand besitzen als das Druckbegrenzungsventil 40 samt dem Widerstand, der der Schieber des Ventils 18a dem anliegenden Drucköl entgegensetzt. Insbesondere sollte der hydraulische Widerstand im Druckregelventil 28 von A nach T so groß sein, dass die Feder des Schiebers des Druckregelventils 18a durch das über den Steuereingang einströmende Öl überdrückt werden kann: Gegebenenfalls kann zwischen dem Ausgang T des Druckregelventils 28 und dem Ölsumpf bzw. Ölreservoir noch eine weitere Drossel oder Blende eingesetzt werden. Zu erwähnen ist noch, dass das Druckbegrenzungsventil 40 auch als Einwegventil dient, das im normalen Betrieb kein Öl und im Auslösefall Öl, nur in einer Richtung durchlässt.

Gegenüber der Ausführungsform der Fig. 5 bietet die Ausführungsform der Fig. 7 den Vorteil, dass das Druckbegrenzungsventil 40 kleiner sein und somit kostengünstiger gebaut und verbaut werden kann als das Druckbegrenzungsventil 32 gemäß Fig. 5. Gemäß Fig. 5 muss nämlich der gesamte geförderte Volumenstrom der Druckversorgungspumpe 14 durch das Druckbegrenzungsventil 32 zurück zum Pumpeneingang fließen, wohingegen nach Fig. 7 das Druckbegrenzungsventil 40 nur zur Betätigung des Druckregelventils 18a dient und dann der gesamte geförderte Volumenstrom der Druckversorgungspumpe 14 über das Druckregelventil 18a zurück zum Pumpeneingang fließen kann.

Auch auf der Kühlölversorgungsseite der Pumpenanordnung 10 ist nach Fig. 7 eine Begrenzungsschaltung vorgesehen. Anstelle eines Druckbegrenzungsventils ist gemäß der Darstellung in Fig. 7 ein Rückschlagventil 46 vorgesehen. Alternativ könnte aber auch ein Druckbegrenzungsventil eingesetzt werden, das in der Regel allerdings einen geringeren Öffnungsdruck als das Druckbegrerizungsventil 40 aufweisen müsste, weil der Druck des Kühlöls in der Regel geringer als der Systemdruck auf der Druckölversorgungsseite sein wird.

Im Falle des Einsatzes des Rückschlagventils 46 kann die Feder des Schiebers für das Volumenstromregelventil 22a mit einer gewissen Vorspannung derart eingebaut werden, dass die Vorspannung dem Druck entspricht, an dem das Volumenstromregelventil 22a beginnt, das von der Kühlölpumpe 16 geförderte Öl in den Ansaugtrakt zurückzuleiten, den Kühlölvolumenstrom also abzuregeln.

Zwischen dem Druckregelventil 24 und dem Steuereingang des Volumenstromregelventils 22a ist ähnlich wie die Drossel oder Blende 42 auf der Druckölseite eine Drossel oder Blende 48 eingebaut. Der Strömungswiderstand des Rückschlagventils 46 bzw. des hier alternativ vorgesehenen Druckbegrenzungsventils sollte kleiner sein als der Strömungswiderstand der Blende oder Drossel 48 samt dem Strömungswiderstand des Ventils 24 in Richtung zum Ölreservoir, so dass ein Abfließen des Öls vom Steuereingang des Volumenstromregelventils 22a in Richtung zum Tank verhindert wird.

Zwar ist - wie erwähnt - der Kühlöldruck in der Regel niedriger als der Drucköldruck. Gleichwohl ist es sinnvoll, einen maximalen Kühlöldruck abzusichern. Dies wird beim Beispiel der Fig. 7 vermittels des Volumenstromregelventils 22a erreicht, indem über die Ansteuerung vermittels des Rückschlagventils 46 bzw. des Druckbegrenzungsventils der Schieber des Volumenstromregelventils in Absteuerstellung bewegt wird. Es kommt durchaus aber auch in Betracht, ein zwischen Eingangsseite und Ausgangsseite der Kühlölpumpe 16 geschaltetes Druckbegrenzungsveritil (vgl. Ventil 32 in Fig. 5) vorzusehen.

Durch die verschiedenen geschilderten Druckbegrenzungsfunktionen werden Fail-Save-Eigenschaften der betreffenden Schaltungsanordnung erreicht, die eine hohe Sicherheit gegen Beschädigungen durch zu hohen Druck geben.

Zur Fig. 7 ist noch darauf hinzuweisen, dass die Verwendung eines Saugfilters 50 in einer den beiden Pumpen 14 und 16 gemeinsamen Ansaugleitung gezeigt ist.

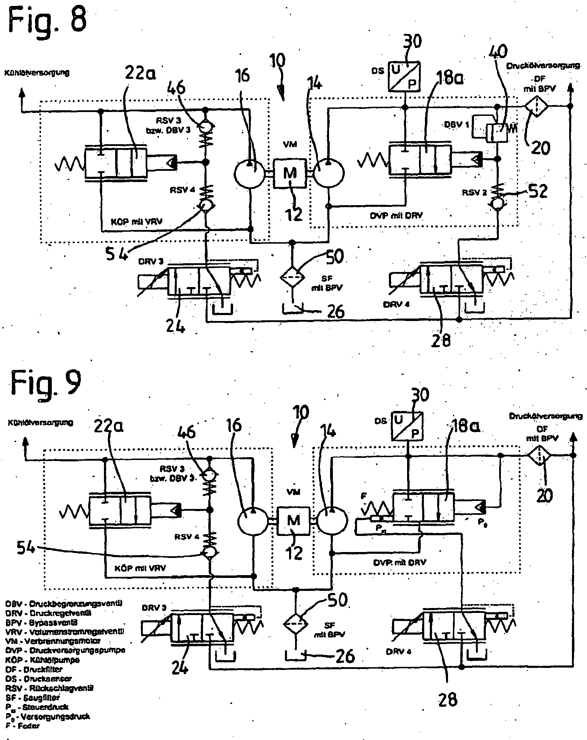

Das Beispiel der Fig. 8 entspricht im Wesentlichen dem Beispiel der Fig. 7. Anstelle der Blenden 42 und 48 sind allerdings Rückschlagventile 52 und 54 vorgesehen. Die Rückschlagventile bieten den Vorteil, dass die kein Öl in der Gegenrichtung durchlassen, so dass kein Öl fälschlich zum Reservoir abfließen kann. Es brauchen deswegen keine speziellen Strömungswiderstände eingehalten werden. Allerdings sollten gewisse Leckagen etwa an den Schiebern des Druckregelventils 18a und des Volumenstromregelventils 22a oder an den Rückschlagventilen 52 und 54 vorgesehen werden, damit sich der auf die Schieber der Ventile 18a und 22a wirkende Öldruck wieder abbauen kann.

Beim Beispiel der Fig. 9 ist das Druckregelventil 18a der Druckversorgungspumpe 14 ähnlich wie beim Beispiel der Fig. 2 in Selbstregelung ausgeführt, indem der Schieber des Druckregelventils 18a von der einen Seite mit dem Systemdruck Pₒ beaufschlagt wird. Im Gegensatz zum Beispiel der Fig. 2 wirkt aber in entgegengesetzter Betätigungsrichtung zum Öldruck auf den Ventilschieber nicht nur eine Federvorspannkraft, sondern zusätzlich ein vom Druckregelventil 28 bereitgestellter Steuerdruck Pₛₜ. Die wirksamen Kolbenflächen des Schiebers in Bezug auf den Systemdruck Pₒ und den Steuerdruck Pₛₜ sind derart gewählt, dass die aus dem Versorgungsdruck Pₒ resultierende Federkraft in Abregelrichtung für den maximal zulässigen Systemdruck auf jeden Fall größer ist als die Federvorspannkraft und der maximal mögliche Steuerdruck Pₛₜ, so dass die Pumpe im Fehlerfall auf jeden Fall sicher abgeregelt wird. Im Fehlerfall steht also jedenfalls eine Druckregelfunktion entsprechend Fig. 2 zur Verfügung, wobei im Normalfall aber überdies eine Einstellung des resultierenden Öldruckniveaus vermittels des Ventils 28 möglich ist.

Allgemein ist darauf hinzuweisen, dass die Drucksensoren, die bei den verschiedenen Varianten zum Teil dargestellt sind, nicht zwingend erforderlich sind, aber zur Verbesserung der Regelgenauigkeit des Versorgungsdrucks durchaus sehr vorteilhaft sind. Wird kein Drucksensor verwendet, so können Kennlinien der verschiedenen Ventile in einer Steuerelektronik abgelegt werden und der Versorgungsdruck dann gesteuert eingestellt werden. Entsprechendes gilt für die Kühlölvolumenströme.

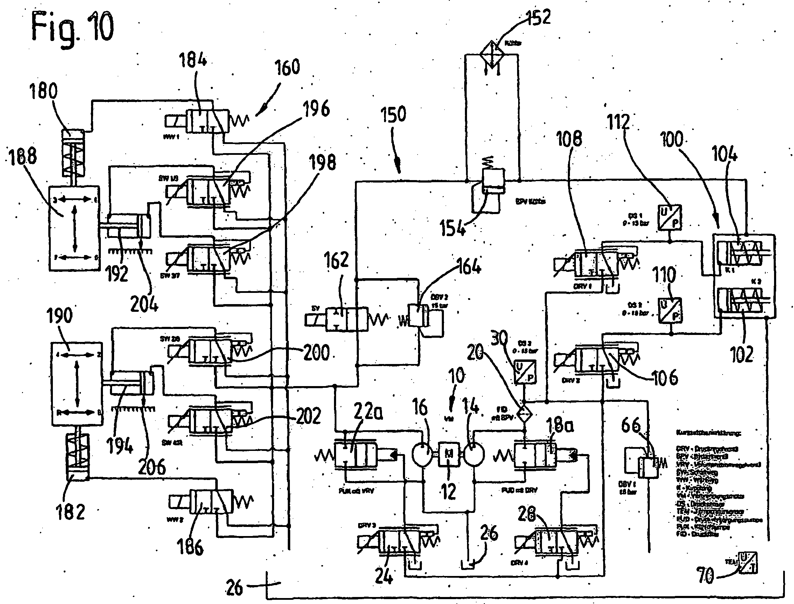

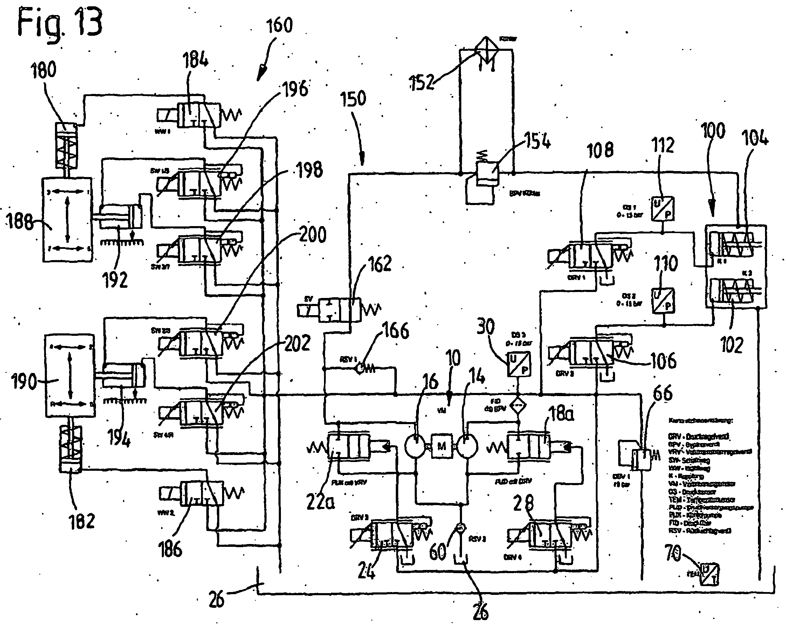

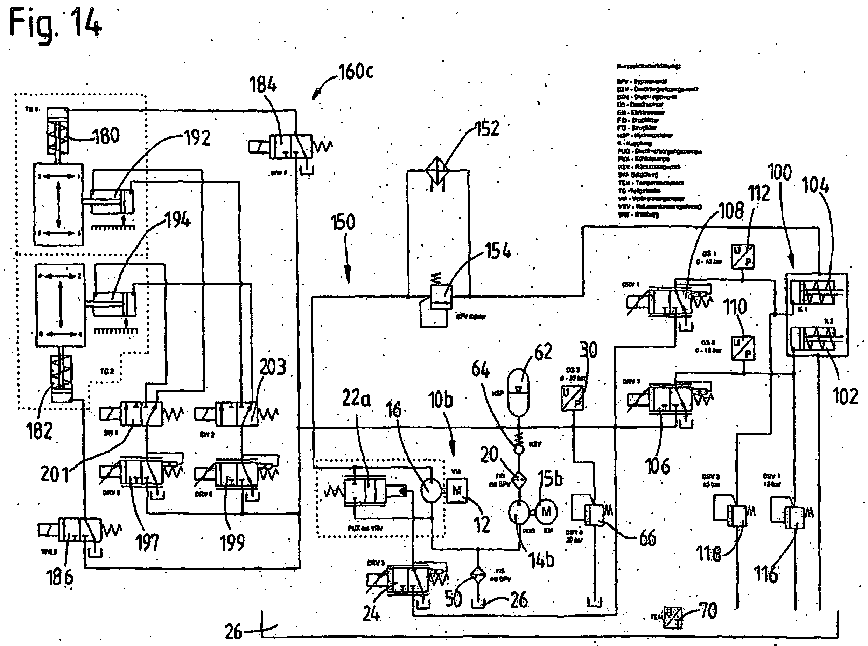

Fig. 10 bis 13 zeigen jeweils hydraulische Schaltpläne mit einer Pumpenanordnung 10, die im Wesentlichen der Pumpenanordnung gemäß Fig. 4 entspricht. Soweit vorgesehen, ist der Drucksensor 30 allerdings auf der anderen Seite des Druckfilters 20 angeordnet. Man könnte den Druckfilter aber ohne weiteres entsprechend Fig. 4 auf der der Druckpumpe 14 näheren Seite des Druckfilters vorsehen. Alternativ oder zusätzlich zum Druckfilter könnte ferner ein Saugfilter zweckmäßig eingesetzt werden, beispielsweise in der gemeinsamen Ansaugleitung der beiden Pumpen 14 und 16. Gemäß Fig. 13 ist in der gemeinsamen Ansaugleitung der beiden Pumpen 14 und 16 ein Rückschlagventil 60 angeordnet, das durchaus mit einem Saugfilter in Reihe geschaltet sein könnte. Durch das Rückschlagventil 60 wird erreicht, dass zur Eingangsseite der Pumpe 14 bzw. Pumpe 16 rückgeführtes Öl nicht in das Ölreservoir 26 zurückläuft, sondern eingangsseitig der beiden Pumpen ohne Druckverluste zur Verfügung steht. Ein derartiges Rückschlagventil könnte ohne weiteres auch bei den anderen Beispielen der Fig. 1 bis 12 sowie auch bei den Beispielen der Fig. 13 und 14 zweckmäßig vorgesehen sein.

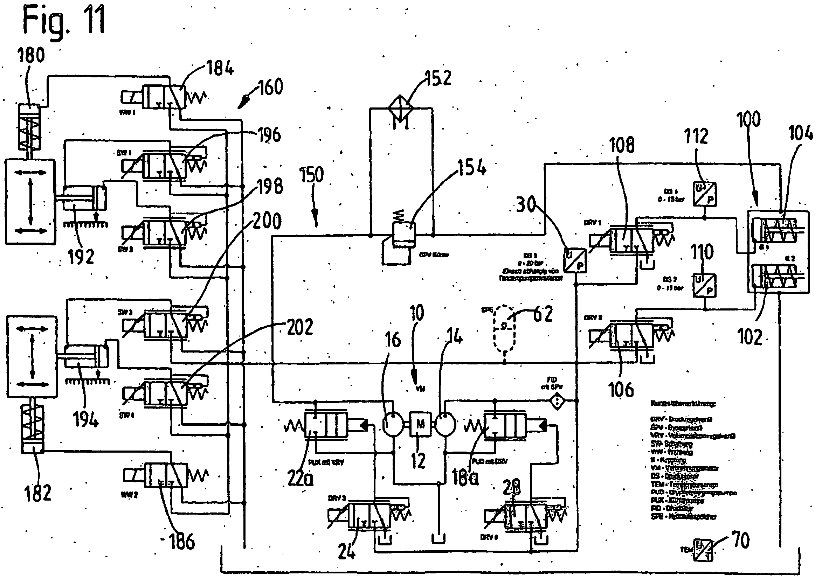

Fig. 11 deutet gestrichelt die zweckmäßige Möglichkeit an, einen Druckspeicher oder Hydrospeicher 62 ausgangsseitig der Druckölpumpe 14 vorzusehen, um Druckschwankungen im Druckölversorgungssystem zu vermeiden und bei einer geeigneten Auslenkung des Systems auch unabhängig von dem Laufen des Verbrennungsmotors 12, etwa in einer Startphase des Kraftfahrzeugs, Betätigungsdruck für die Betätigung der Kupplungseinrichtung oder/und des Getriebes zur Verfügung zu haben. Um ein Abfließen von Drucköl aus dem Druck- oder Hydrospeicher aufgrund von Leckagen oder dergleichen zu verhindern, könnte man den Druck- oder Hydrospeicher über ein Schaltventil am Druckölsystem anschließen.

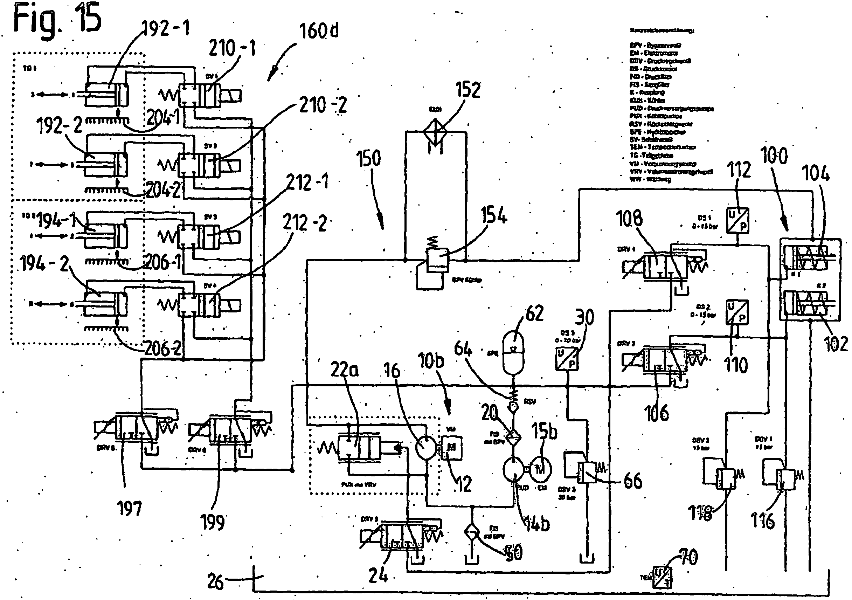

Eine grundsätzlich anders ausgeführte Pumpenanordnung 10b ist im Falle der Beispiele der Fig. 14 und 15 realisiert. Es ist eine durch den Verbrennungsmotor 12 angetriebene Kühlölpumpe 16 vorgesehen, die wie die Kühlölpumpe 16 etwa der Pumpenanordnung 10 gemäß Fig. 4 mittels eines 2/2-Wege-Volumenstromregelventils 22a und eines dieses vorsteuernden Druckregelventils 24 durch bedarfsweise Rückführung von Kühlöl zum Pumpeneingang hinsichtlich des effektiv abgegebenen Kühlölvolumenstroms steuerbar oder regelbar ist. Als Druckölpumpe 14b ist hingegen eine durch einen Elektromotor 15b angetriebene Pumpe 14b vorgesehen, deren Abgabedruck durch entsprechende Ansteuerung des Elektromotors 15b einstellbar, ggf. steuerbar oder regelbar, ist. Beide Pumpen 16 und 14b saugen über eine gemeinsame Ansaugleitung Öl aus dem Ölreservoir 26 an, wobei in der gemeinsamen Ansaugleitung ein Saugfilter 50 vorgesehen ist.

Im Falle der elektromotorisch angetriebenen Druckölpumpe ist die Ausstattung des Druckölsystems mit einem Druckspeicher oder Hydrospeicher 62 besonders zweckmäßig, da ein bedarfsweiser Betrieb der Druckölpumpe in Abhängigkeit vom etwa mittels des Drucksensors 30 erfassten Drucks zum Wiederauffüllen des Speichers 62 möglich und energetisch sehr sinnvoll ist. Um ein Abfließen von Drucköl aus dem Hydrospeicher bzw. aus dem Druckölsystem zu verhindern, ist in der Abgabeleitung der Druckölpumpe 14b die Reihe mit dem Druckfilter 20 ein Rückschlagventil 64 angeordnet. Zur Vermeidung von schädlichen Überdrücken ist parallel zur Druckölpumpe 14b ein Druckbegrenzungsventil 66 eingebaut, das im Auslösefall unmittelbar zum Ölreservoir 26 hin aufmacht. Derartige Druckbegrenzungsventile 66 finden sich auch bei den Beispielen der Fig. 10 und 13.

Betreffend die Ölversorgung ist noch anzumerken, das bei allen Beispielen der Fig. 10 bis 15 im Ölreservoir 26 (ggf. Ölsumpf) ein Temperatursensor 70 angeordnet ist, der für Überwachungszwecke dient und ggf. temperaturabhängige Eingriffe in das Hydrauliksystem ermöglicht, beispielsweise zur Ergreifung von speziellen Kühlmaßnahmen.

Bei allen Beispielen der Fig. 10 bis 15 ist eine hydraulisch betätigte Doppelkupplung 100 mit zwei Lamellen-Kupplungsanordnungen vorgesehen, die jeweils durch einen hydraulischen Nehmerzylinder 102 bzw. 104 repräsentiert sind, der zur Betätigung der jeweiligen Lamellenkupplungsanordnung im Einrücksinne dient. Den beiden hydraulischen Nehmerzylindern 102 und 104 ist jeweils ein 3/2-Wiege-Druckregelventil 106 bzw. 108 zugeordnet, über das der jeweilige Nehmerzylinder gesteuert oder geregelt mit Drucköl bzw. Druck beaufschlagbar ist. Hierzu sind die Druckregelventile eingangsseitig an der Druckölversorgung der Pumpenanordnung 10 bzw. 10b, speziell an der Druckölpumpe 14 bzw. 14b, angeschlossen. Der von den Druckregelventilen 106 und 108 eingestellte Öldruck ist mittels eines jeweiligen Drucksensors 110 bzw. 112 erfassbar, so dass besonders zweckmäßig eine geregelte Kupplungsbetätigung realisiert sein kann. Der eingangsseitige Druck für die Druckregelventile 106 und 108 ist im Falle der Beispiele der Fig. 10, 11, 13, 14 und 15 durch den schon angesprochenen Drucksensor 30 erfassbar und im Falle der Beispiele der Fig. 10, 13, 14 und 15 durch das zur Druckölpumpe 14 parallel geschaltete Druckbegrenzungsventil 66 auf einen maximal zulässigen Druck abgesichert. Im Falle der Beispiele der Fig. 14 und 15 ist ferner noch der vom jeweiligen Druckregelventil 106 bzw. 108 abgegebene, den jeweiligen hydraulischen Nehmerzylinder 102 bzw. 104 beaufschlagende Druck durch ein zum Reservoir 26 hin öffnendes Druckbegrenzungsventil 116 bzw. 118 auf einen maximal zulässigen Druck abgesichert. Derartige unmittelbar den die hydraulischen Nehmerzylinder beaufschlagenden Betätigungsdruck absichernde Druckbegrenzungsvetile können auch im Falle der anderen Beispiele zweckmäßig vorgesehen sein.

Die Doppelkupplung 100 wird über einen Kühlölkreislauf 150 mit von der Kühlölpumpe 16 bereitgestelltem Kühlöl versorgt. Kühlöl, das durch die Doppelkupplung 100 geflossen ist und dort Wärme aufgenommen hat, wird in das Ölreservoir 26 zurückgeführt. Der Kühlölkreislauf weist stromaufwärts der Doppelkupplung 100 einen Ölkühler 152 auf, der beispielsweise einen Wärmeaustausch mit der Umgebungsluft oder mit einem Kühlwasserkreislauf ermöglicht. Zum Ölkühler 152 ist ein als Bypassventil dienendes Druckbegrenzungsventil 154 parallel geschaltet, das dann aufmacht, wenn der Kühlöldruck eine bestimmte Druckschwelle übersteigt. Dies ist beispielsweise dann der Fall, wenn bei sehr kaltem Öl, etwa in einer Startphase des Kraftfahrzeugs, das Öl noch recht zähflüssig ist und den Ölkühler 152 nur unter Aufbau eines großen Drucks und dann ggf. in zur Kühlung der Doppelkupplung nicht hinreichender Menge passieren kann. Anstelle des als Druckbegrenzungsventil ausgeführten Bypassventils 154 könnte man auch ein elektrisch schaltbares Schaltventil vorsehen, das beispielsweise auf Grundlage der mittels des Temperatursensors 70 erfassten Temperatur geöffnet und geschlossen wird.

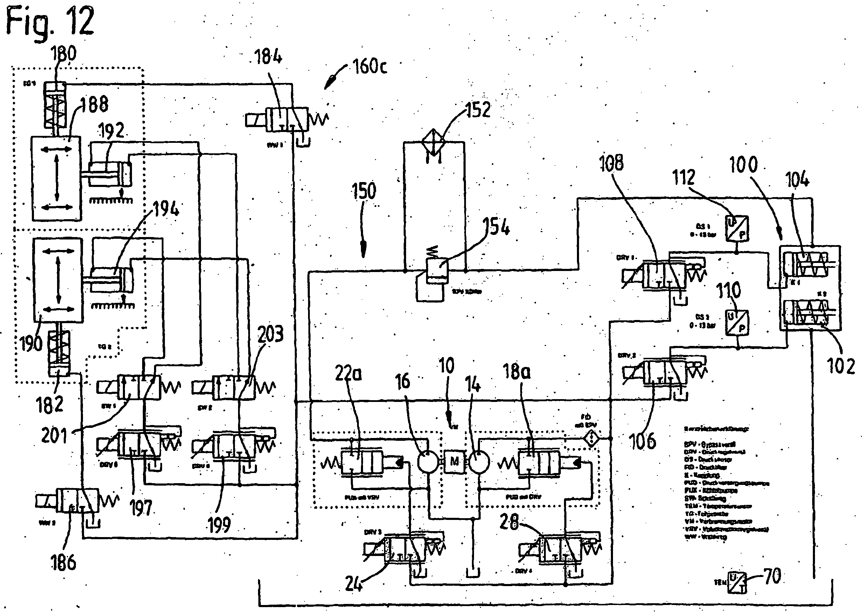

Die hydraulischen Schaltungen der Fig. 10 bis 15 zeigen jeweils noch einen Getriebetätigungsabschnitt 160 (Fig. 10, 11 und 13), 160c (Fig. 12 und 14) und 160d (Fig. 15).

Gemäß Fig. 10 wird der Getriebebetätigungsabschnitt 160 von der Kühlölpumpe 16 mit Kühlöl versorgt, das als Drucköl für die Getriebebetätigung unter Vermittlung von hydraulischen Nehmerzylindern dient, wie im Detail noch zu erläutern ist. Zum Schalten des Getriebes wird das Kühlöl durch ein im Kühlölkreislauf 150 angeordnetes Schaltventil 162 aufgestaut und so auf das zum Schalten nötige Druckniveau gebracht. Eine Überdruckabsicherung ist durch das parallel zum Schaltventil 162 geschaltete Druckbegrenzungsventil 164 erreicht.

Gemäß Fig. 10 ist also die Druckölpumpe 14 alleine für die Kupplungsbetätigung und die Kühlölpumpe 16 einerseits für die Kühlung der Kupplung und andererseits zum Betätigen des Getriebes über die Getriebeaktuatorik zuständig. Eine derartige Trennung der Betätigungen von Kupplung und Getriebeaktuatorik ist insbesondere dann sinnvoll, wenn die Druckregelgüte der Kupplungsbetätigungspumpe nicht ausreichend schnell oder nicht ausreichend genau ist. Beim Betätigen der Getriebeaktuatorik wird nämlich in kurzer Zeit vergleichsweise viel Öl benötigt. Dies könnte zu einem Einbrechen des Versorgungsdrucks für die Kupplungsbetätigung führen, was zur Folge hätte, dass eine eingerückte Kupplungsanordnung für eine kurze Zeitspanne in einem gewissen Ausmaß ausrücken bzw. das gerade benötigte Moment nicht übertragen könnte.

Gemäß den Beispielen der Fig. 11, 12, 14 und 15 wird das Drucköl für die Getriebebetätigung dem Getriebebetätigungsabschnitt 160 bzw. 160c bzw. 160d von der auch der Kupplungsbetätigung dienenden Druckölpumpe 14 bzw. 14b bereitgestellt. Um der im Zusammenhang mit Fig. 10 erwähnten Gefahr eines Abfalls des Betätigungsdrucks für die Kupplungseinrichtung zu begegnen, kann zweckmäßig ein Hydrospeicher oder Druckspeicher wie der Druckspeicher 62 eingesetzt werden.

Die Bereitstellung der Druckversorgung für die Getriebeaktuatorik durch die Druckversorgungspumpe der Kupplungseinrichtung ist dann besonders sinnvoll, wenn die Druckölpumpe trotz unterschiedlicher momentaner Fördervolumina einen nahezu konstanten Druck erzeugt oder in einen Hydrospeicher, wie schon erwähnt, fördert. Dieser hat die Aufgabe, sowohl das benötigte Drucköl zu speichern als auch Druckspitzen bzw. Druckeinbrüche zu glätten. Eine Alternative zur durch den Verbrennungsmotor angetriebenen Druckölpumpe, deren Betrieb vom Betrieb des Verbrennungsmotors abhängt, kommt als besonders zweckmäßige Alternative auch die schon angesprochene elektromotorisch angetriebene Druckölpumpe 15b in Betracht, die insbesondere dazu verwendet werden kann, bedarfsweise den Hydrospeicher 62 von Zeit zu Zeit zu füllen.

Beim Beispiel der Fig. 13 ist ebenfalls vorgesehen, dass das Drucköl für die Getriebebetätigung durch die Druckölpumpe 14 bereitgestellt wird, die auch zur Kupplungsbetätigung dient. Zur Verbesserung der Start-Stopp-Fähigkeit ist allerdings vorgesehen, dass zusätzlich zu dem von der Druckölpumpe 14 geförderten Öl von der Kühlölpumpe 16 gefördertes Öl der Druckölversorgung für die Getriebebetätigung oder/und für die Kupplungsbetätigung dient. Hierzu ist eine Verbindung zwischen dem Kühlölkreislauf 150 und einer zum Getriebebetätigungsabschnitt 160 und zu den Druckregelventilen 106 und 108 führenden Druckölleitung vorgesehen. In dieser Verbindung ist ein Rückschlagventil 166 angeordnet, das dann aufmacht, wenn eingangsseitig des Rückschlagventils 166 ein Mindestdruck sich aufgebaut hat. Hierzu ist im Druckölkreislauf 150 ein Schaltventil 162 vorgesehen. Wird dies Schaltventil 162 geschlossen, so baut sich eingangsseitig des Rückschlagventils 166 ein entsprechender Druck auf, und das sich aufstauende Kühlöl fließt in Richtung zum Getriebebetätigungsabschnitt 160 oder/und zu den Druckregelventil 106 und 108 ab, in Ergänzung zum von der Druckölpumpe 14 abgegebenen Drucköl.

Durch die bedarfsweise Verwendung von Kühlöl als Drucköl zur Kupplungsbetätigung oder/und zur Getriebebetätigung werden die Start-Stopp-Eigenschaften des Kraftfahrzeugs deutlich verbessert. So kann bei einem Motorstart das Schaltventil 162 geschlossen werden und das von der Kühlölpumpe 16 geförderte Öl zusätzlich zu dem von der Druckölpumpe 14 geförderten Öl zum Schließen der Kupplungen sowie ggf. zum Betätigen des Getriebes verwendet werden. Eine Getriebebetätigung ist im Prinzip vermeidbar, wenn die Gänge vor dem Abstellen eines Kraftfahrzeugs in geeigneter Weise voreingelegt werden. Im normalen Fahrbetrieb herrscht im Druckölkreislauf ein hinreichender Druck, so dass das Schaltventil 162 wieder. geöffnet werden bzw. geöffnet bleiben kann und das Rückschlagventil 166 sich schließt bzw. geschlossen bleibt.

Zur Fig. 13 ist noch zu erwähnen, dass das Rückschlagventil 60 ein Rückfliessen des Öls im Ansaugtrakt der Pumpen 14 und 16 in den Öltank verhindert. Damit lässt sich beim Motorstart Zeit sparen, die benötigt wird, um das Öl anzusaugen. Wird im Start-Stopp-Betrieb das Schaltventil 162 bei abgestelltem Motor ebenfalls geschlossen, so wird auch hier ein Leerlaufen der Leitung verhindert.

Wie schon erläutert, ist nach Fig. 14 und Fig. 15 eine elektromotorische Druckölpumpe bzw. Druckölversorgungspumpe 14b vorgesehen, während die Kühlölversorgung wie bei den anderen Beispielen mittels einer verbrennungsmotorischen Pumpe 16 sichergestellt wird. Die elektromotorisch angetriebene Druckölpumpe 14b saugt das Öl durch den Saugfilter 50 an, fördert es durch den Druckfilter 20 und das Rückschlagventil 64 in den Hydrospeicher 62. Aus diesem Speicher 62 wird dann die Getriebeaktuatorik (Getriebebetätigungsabschnitt 160c) und die Kupplungsbetätigungsaktuatorik (Ventile 106, 108 mit den Nehmerzylindern 102 und 104) mit Drucköl versorgt. Der Drucksensor 30 überwacht den Speicherdruck. Auf Grundlage dieses Sensorsignals steuert eine zugehörige Steuereinheit den Elektromotor 15b der Druckölpumpe 14b an. Das Druckbegrenzungsventil 66 sichert den Druckölkreislauf gegen Überdruck ab. Die Druckbegrenzungsventile 116 und 118 sichern die Kupplungsanordnungen bzw. die Nehmerzylinder 102 und 104 gegen Überdruck ab. Die Druckregelventile 106 und 108 stellen den benötigten Kupplungsbetätigungsdruck bereit, der mittels der Drucksensoren 110 und 112 eingeregelt werden kann. Ein Vorteil der Anordnung gemäß Fig. 14 ist die verbrennungsmotorenunabhängige Druckölversorgung. Es lässt sich so eine gute Start-Stopp-Funktion realisieren, da die Druckerzeugung auch bei ausgeschaltetem Verbrennungsmotor funktioniert.

Betreffend die Ausführung des Getriebes und die Ausführung der zugehörigen Getriebeaktuatorik bestehen vielseitige Möglichkeiten. Die Fig. 10 bis 15 zeigen Beispiele, die sich auf ein Sieben-Gang-Getriebe (mit Rückwärtsgang ein Acht-Gang-Getriebe) beziehen. Die acht Gänge sind auf zwei Teilgetriebe aufgeteilt. Die ungeraden Getriebegänge werden durch ein erstes Teilgetriebe und die geraden Getriebegänge werden durch ein zweites Teilgetriebe realisiert. Die Schaltaktuatorik für ein jeweiliges Teilgetriebe umfasst nach den Fig. 10, 11 und 13 einen jeweiligen einfach wirkenden Stellzylinder 180 bzw. 182, der in einer Richtung federvorgespannt ist und in der anderen Richtung mit Drucköl von einem zwei Schaltstellungen aufweisenden 3/2-Wege-Ventil 184 bzw. 186 mit Drucköl beaufschlagbar ist. Anstelle der Schaltventile 184 und 186 können durchaus auch Druckregelventile verwendet werden. Da der zugeordnete hydraulische Nehmerzylinder 180 bzw. 182 aber zur Gassenauswahl des jeweiligen Teilgetriebes mittels einer Gassenmechanik 188 bzw. 190 dient, reicht eine einfache, ungesteuerte bzw. ungeregelte Beaufschlagung des betreffenden hydraulischen Nehmerzylinders 180 bzw. 190 mit Drucköl zur Gassenauswahl aus.

Die eigentliche Schaltbewegung in einer ausgewählten Gasse des jeweiligen Teilgetriebes wird mittels eines doppelt wirkenden Nehmerzylinders 192 bzw. 194 bewerkstelligt, der über zwei zugeordnete Druckregelventile 196 und 198 bzw. 200 und 202 gesteuert oder geregelt mit Druck zur Verstellung einer jeweiligen Schaltstange in einer Axialrichtung bzw. der Schaltstange in der hierzu entgegengesetzten Axialrichtung beaufschlagbar ist. Die 3/2-Wege-Druckregelventile 196, 198, 200 und 202 sind vorzugsweise als Proportional-Druckregelventile ausgeführt, um auf Basis eines variabel einstellbaren Drucks unterschiedliche Synchronkräfte einstellen zu können.

Je nach Stellung des Wählwegzylinders bzw. Gassenwählzylinders 180 bzw. 182 und der Richtung des Schaltweges der über den doppelt wirkenden Zylinder 192 bzw. 194 betätigten Schaltstange wird auf einem betreffenden Teilgetriebe einer der Gänge 1, 3, 5 und 7 bzw. 2, 4, 6 und R eingelegt. Man kann selbstverständlich auch eine andere Gangbelegung als die hier angesprochene und in Fig. 10 schematisch gezeigte vorsehen.

Man kann vorteilhaft eine Wegsensierung für die Schaltbewegung vorsehen. Beispielsweise kann man dem doppelt wirkenden Zylinder 192 bzw. 194 einen jeweiligen Wegsensor 204 bzw. 206 zuordnen, insbesondere wenn variable Synchronkräfte einzustellen sind. Eine derartige Wegsensierung für die Schaltwege ist auf jeden Fall wichtiger als eine im Prinzip ebenfalls mögliche Wegsensierung für den Wählweg, da der Gassenwählzylinder 180 bzw. 182 nur die beiden Endlagen ansteuern muss. Die. Schaltweg-Wegsensierung wird in der Regel dann kaum entbehrlich sein, wenn eine gezielte Einstellung und Änderung von Synchronkräften über einen variabel eingestellten Betätigungsdruck gewünscht ist.

Bei den Beispielen der Fig. 10, 11 und 13 sind vier Druckregelventile, insbesondere Proportional-Druckregelventile, für die Getriebebetätigung bezogen auf eine ausgewählte Gasse der beiden Teilgetriebe erforderlich. Demgegenüber kommen die Beispiele der Fig. 12 und 14 mit nur zwei 3/2-Wege-Druckregelventilen 197 und 199 aus, die ebenfalls vorzugsweise als Proportional-Druckregelventile ausgeführt sind. Diese Druckregelventile dienen zum Einlegen der Gänge, die die Schaltstangen der Teilgetriebe entweder in die eine oder die andere Richtung betätigen. Die Auswahl, welches der beiden Teilgetriebe vermittels des jeweiligen Druckregelventils 197 bzw. 199 zu schalten ist, erfolgt über zwei 3/2-Wege-Ventile 201 bzw. 203, die mit dem vom Druckregelventil 197 bzw. 199 abgegebenen Betätigungsdruck entweder den doppelt wirkenden Nehmerzylinder 192 oder den doppelt wirkenden Nehmerzylinder 194 auf einer dem jeweiligen Ventil 201 bzw. 203 zugeordneten Kolbenseite beaufschlagen. Durch die Reduzierung der Anzahl von vergleichsweise teueren Druckregelventilen von vier auf zwei werden durchaus beachtliche Kostenvorteile erreicht.

Im Falle des Beispiels der Fig. 12 erfolgt die Gassenwahl des jeweiligen Teilgetriebes wie bei den Beispielen der Fig. 10, 11 und 13 mittels eines jeweiligen einfach wirkenden Nehmerzylinders 180 bzw. 182 und eines jeweils zugeordneten 3/2-Wege-Ventil 184 bzw. 186 mit zwei Schaltstellungen, das den federbelasteten Zylinder 180 bzw. 182 mit Drucköl versorgt. Betreffend die Gassenauswahlmechaniken 188 und 190 ist noch zu erwähnen, dass diese beispielsweise jeweils für die Auswahl einer zu schaltenden von jeweils zwei Schaltstangen des betreffenden Teilgetriebes dienen, um diese entweder in die eine oder in die andere Richtung mittels des jeweiligen doppelt wirkenden Nehmerzylinders 192 bzw. 194 zu betätigen. Das die beiden Teilgetriebe aufweisende Getriebe kann also insgesamt vier derartige Schaltstangen aufweisen, von denen die beiden Schaltstangen eines Teilgetriebes mittels eines doppelt wirkenden Nehmerzylinders 192 bzw. 194 wahlweise betätigbar sind.

Ein weiteres Beispiel für einen zweckmäßigen Getriebebetätigungsabschnitt 160d ist in Fig. 15 dargestellt. Auf eine Gassenauswahlmechanik mit zugehörigem Betätigungszylinder ist verzichtet. Alle vier Schaltstangen des Getriebes, also jeweils alle beide Schaltstangen der beiden Teilgetriebe, sind durch einen eigenen doppelt wirkenden Nehmerzylinder 192-1 bzw. 192-2 für das erste Teilgetriebe und 194-1 bzw. 194-2 für das zweite Teilgetriebe betätigbar. Der Druck für die Betätigung der Schaltstangen mittels der angesprochenen doppelt wirkenden Nehmerzylinder wird betreffend die eine Schaltrichtung von einem vorzugsweise als Proportionalventil ausgeführten 3/2-Wege-Druckregelventil 197 und betreffend die andere Schaltrichtung von einem vorzugsweise als Proportionalventil ausgeführten 3/2-Wege-Druckregelventil 199 bereitgestellt. Die vier Nehmerzylinder 192-1, 192-2, 194-1 und 194-2 sind über ein jeweiliges 4/2-Wege-Schaltventil 210-1, 210-2, 212-1 bzw. 21 2-2 parallel an den beiden Druckregelventil 197 und 199 angeschlossen. Diese 4/2-Wege-Ventile haben die Aufgabe, dass an ihnen anstehende Drucköl bedarfsweise an einen jeweils zu beaufschlagenden Zylinder freizugeben. Dabei können alle Zylinder in eine gemeinsame Richtung bewegt oder einzeln geschaltet werden. Im Prinzip ist auswählbar, ob nur ein einzelnes oder mehrere der Zylinder bewegt werden. Soweit mehrere Zylinder bewegt werden, ist es bei der in Fig. 15 realisierten Schaltung zwingen, dass diese sich in der gleichen Richtung bewegen. Vorzugsweise ist eine Erfassung der momentanen Stellposition über einen jeweiligen Wegsensor 204-1, 204-2, 206-1 bzw. 206-2 vorgesehen.

Der Vorteil der Getriebeaktuatorschaltung des Getriebebetätigungsabschnitts 160d gemäß Fig. 15 ist, dass ein vergleichsweise einfacher Aufbau realisiert ist, der mit wenigen Bauteilen auskommt. Insbesondere lassen sie sich einfache Schaltventile verwenden, in Kombination mit den beiden Druckregelventilen.

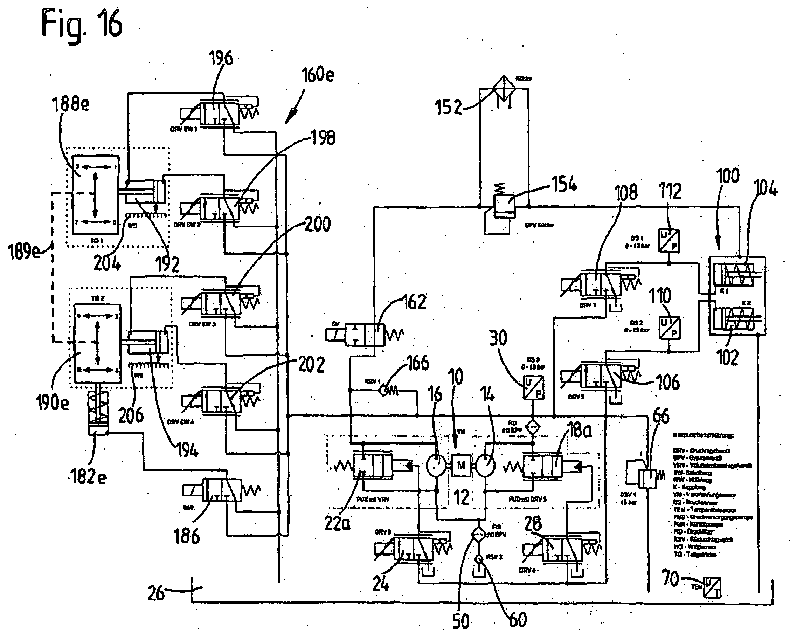

Fig. 16 zeigt einen weiteren hydraulischen Schaltplan mit einer Pumpenanordnung 10, die im Wesentlichen der Pumpenanordnung gemäß Fig. 4 entspricht. Der Schaltplan der Fig. 16 unterscheidet sich vom Schaltplan der Fig. 13 zum einen dadurch, dass in der gemeinsamen Ansaugleitung der beiden Pumpen 14 und 16 sowohl ein Saugfilter 50 als auch ein Rückschlagventil 60 vorgesehen ist. Ferner unterscheidet sich der Schaltplan der Fig. 16 vom Schaltplan der Fig. 13 in der Ausgestaltung des Getriebebetätigungsabschnitts. Der Getriebebetätigungsabschnitt 160e der Fig. 16 entspricht hinsichtlich der axialen Betätigung der Getriebeschaltstangen mittels der doppelt wirkenden Zylinder 192 und 194 und der zugeordneten Druckregelventile 196, 198, 200 und 202 dem Getriebebetätigungsabschnitt 160 der Fig. 13. Unterschiedlich ist hingegen die Art und Weise der Gassenauswahl. Gemäß Fig. 16 erfolgt diese mittels eines beiden Teilgetrieben zugeordneten hydraulischen Nehmerzylinders 182e, der wie der Zylinder 182 gemäß Fig. 13 in einer Richtung federvorgespannt ist und in der anderen Richtung mit Drucköl von dem zwei Schaltstellungen aufweisenden 3/2-Wege-Ventil 186 mit Drucköl beaufschlagbar ist. Der hydraulische Nehmerzylinder 182e ist gemeinsam zwei Teil-Gassenmechaniken 188e und 190e zugeordnet, von denen die Teil-Gassenmechanik 188e auf Schaltstangen des ersten Teilgetriebes und die Teil-Gassenmechanik 190e auf Schaltstangen des zweiten Teilgetriebes wirkt. Die beiden Teil-Gassenmechaniken 188e und 190e sind Teile einer Gesamt-Gassenmechanik des Getriebes. Der hydraulische Nehmerzylinder 182e steht mit der Teil-Gassenmechanik 190 in Wirkverbindung oder ist mit dieser Teil-Gassenmechanik in Wirkverbindung bringbar. Ferner steht der hydraulische Nehmerzylinder 182e mit der Teil-Gassenmechanik 188e in Wirkverbindung, oder ist mit dieser Teil-Gassenmechanik in Wirkverbindung bringbar, wie dies durch die gestrichelte Linie 189e repräsentiert ist. Alternativ oder zusätzlich kann die gestrichelte Linie 189e auch eine Verkoppelung oder Verkoppelbarkeit der beiden Teil-Gassenmechaniken 188e und 190e repräsentieren.

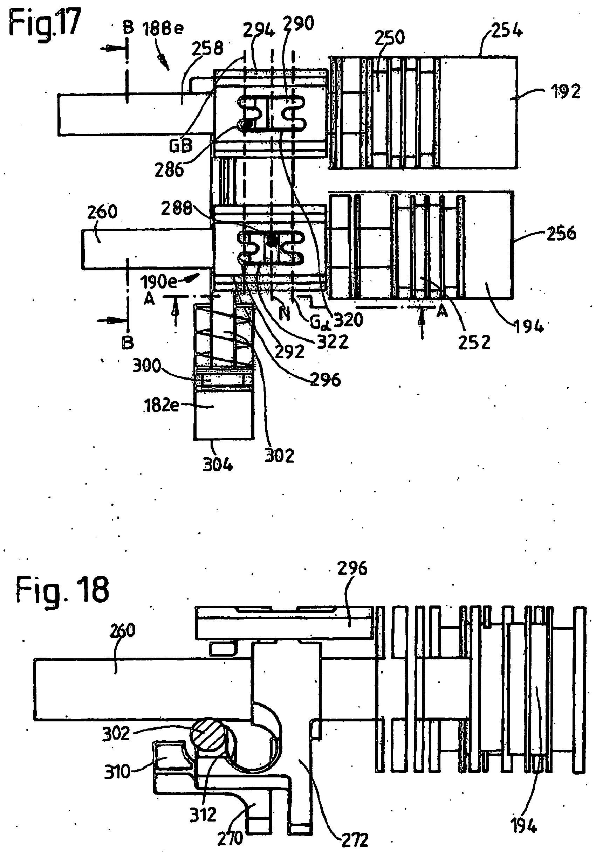

Die Gesamt-Gassenmechanik, der zugehörige hydraulische Nehmerzylinder 182e und die zur axialen Betätigung der Schaltstangen des Getriebes dienenden doppelt wirkenden Nehmerzylinder 192 und 194 bilden eine Betätigungsanordnung des Getriebes, die beispielsweise in der Art der Ausführungsform der im Folgenden zu beschreibenden Fig. 17 bis 20 ausgeführt ist.

Fig. 17 bis 20 zeigen ein Beispiel für eine erfindungsgemäße Getriebebetätigungsanordnung, die beispielsweise als Teil bzw. in Kombination mit dem hydraulischen Schaltplan der Fig. 16 einsetzbar ist. Hiervon wird im Folgenden ausgegangen. Die Betätigungsanordnung der Fig. 17 bis 20 weist dementsprechend zwei doppelt wirkende hydraulische Nehmerzylinder 192 und 194 auf, denen eine zwei Teil-Gassenmechaniken 188e und 190e aufweisende Gesamt-Gassenmechanik zugeordnet ist, die mittels eines einfach wirkenden hydraulischen Nehmerzylinders 182e betätigbar ist.

Die beiden doppelt wirkenden Zylinder 192 und 194 weisen jeweils einen Kolben 250 bzw. 252 in einem jeweiligen Zylindergehäuse 254 bzw. 256 auf. Die Kolben sind an einem zylinderinneren Ende einer als Betätigungsstange dienenden Kolbenstange 258 bzw. 260 angeordnet. Die Kolbenstange oder Betätigungsstange 285 ist zwei Schaltstangen 262 und 264 des einen Teilgetriebes zugeordnet. Die Kolbenstange oder Betätigungsstange 260 ist zwei Schaltstangen 266 und 268 des anderen Teilgetriebes zugeordnet. Mittels der Schaltstangen und ggf. diesen zugeordneten Schaltgabeln oder Schubgabeln können im Wege einer axialen Betätigung (Verschiebung) wenigstens einer der Schaltstangen auf an sich bekannte Art und Weise Getriebegänge eingelegt und ausgelegt werden. Zur axialen Betätigung einer jeweiligen ausgewählten der Schaltstange ist die Betätigungsstange 158 mit beiden der zugeordneten Schaltstangen 262 und 264 und ist die Betätigungsstange 260 mit beiden der zugeordnete Schaltstangen 266 und 268 axial bewegungsverkoppelbar, wobei zu einem Zeitpunkt jeweils nur eine der beiden Schaltstangen 262 und 264 bzw. 266 und 268 mit der zugeordneten Betätigungsstange 258 bzw. 260 axial bewegungsverkoppelt sein kann. Zur Bewegungsverkopplung mit einer ausgewählten der beiden jeweils zugeordneten Schaltstangen tragen die Betätigungsstangen 258 und 260 jeweils ein axial daran festgelegtes, um die betreffende Schaltstange schwenkbares Mitnahmeglied 270 bzw. 272, das zur Herstellung einer formschlüssigen Mitnahmeverbindung mit einher ausgewählten der jeweils zugeordneten beiden Schaltstangen dient. Das Mitnahmeelement 270 ist zwischen einer ersten Schwenkstellung, die der Schaltstange 262 zugeordnet ist, und einer zweiten Schwenkstellung, die der Schaltstange 264 zugeordnet ist, verschwenkbar. Das Mitnahmeelement 272 ist zwischen einer ersten Schwenkstellung, die der Schaltstange 266 zugeordnet ist, und einer zweiten Schwenkstellung, die der Schaltstange 268 zugeordnet ist, verschwenkbar. Befinden sich die Schaltstangen und die zugeordnete Betätigungsstange jeweils in einer vorgegebenen relativen Axialstellung zueinander, so kann das betreffende Mitnahmeelement wahlweise in die erste bzw. zweite Schwenkstellung geschwenkt werden, in der es dann mit einem Eingriffsfinger 280 bzw. 282 im Falle des Mitnahmeelements 270 bzw. einer Eingriffszunge 284 im Falle des Mitnahmeelements 272 in eine Nut der betreffenden Schaltstange 262 bzw. 264 bzw. in eine Nut der betreffenden Schaltstange 266 bzw. 268 eingreifen kann.

Tatsächlich kann dieser Eingriff nur in einer ganz bestimmten absoluten Axialstellung der betreffenden Betätigungsstange 258 bzw. 260 und der zugeordneten Schaltstange 262 bzw. 264 (erste Gruppe von Schaltstangen) bzw. 266 und 268 (zweite Gruppe von Schaltstangen) hergestellt werden, da die Mitnahmeelemente 270 und 272 mit einem jeweiligen Führungsstift 286 bzw. 288 in eine H-Gassenkulisse 290 bzw. 292 in einem zugehörigen, stationär angeordneten Kulissenelement 294 bzw. 296 eingreifen. Die beiden Mitnahmeelemente 270 und 272 sind jeweils nur in einer axialen Stellung schwenkbar, die als Neutralstellung bezeichenbar ist, in der sie mit ihrem jeweiligen Führungsstift 286 bzw. 288 sich an einer Axialposition befinden, die in Fig. 17 durch die gestrichelte Linie N angegeben ist. In dieser Neutralposition kann ein bestehender Mitnahmeeingriff mit einer der Schaltstangen 262 und 264 bzw. 266 und 268 aufgehoben oder, unter der Voraussetzung, dass sich die Schaltstange in einer entsprechenden Axialposition befindet, hergestellt werden. Da die Schaltstangen eine eingestellte Axialposition halten, sofern sie nicht mittels des zugehörigen hydraulischen Kraftzylinders axial verschoben werden, ist es stets gewährleistet, dass eine momentan nicht ausgewählte, also nicht mit dem zugehörigen Mitnahmeelement in Mitnahmeeingriff stehende Schaltstange, eine Axialposition einnimmt, die der Neutralstellung entspricht, so dass durch entsprechendes Verschwenken des Mitnahmeelements 270 bzw. 272 der Mitnahmeeingriff herstellbar ist. In diesem Zusammenhang ist zu beachten, dass aufgrund der H-Gassenkulisse 290 bzw. 292 ein bestehender Mitnahmeeingriff nur in der Neutralstellung aufhebbar ist.

Zur bedarfsweisen Betätigung der beiden Mitnahmeelemente 170 und 172 im Sinne eines in Eingriffbringens mit einer auszuwählenden der zugeordneten Schaltstange bzw. Aussereingriffbringens von einer momentan ausgewählten Schaltstänge dient der hydraulische Nehmerzylinder 182e, der einen federvorgespannten Kolben 300 aufweist. Eine als Wählbetätigungsstange dienende Kolbenstange 302, an deren einen Ende der Kolben 300 innerhalb eines Zylindergehäuses 304 angeordnet ist, erstreckt sich im Wesentlichen orthogonal zu den Betätigungsstangen 258 und 260 und den Schaltstangen 262, 264, 266 und 268. Die Wählbetätigungsstange weist zwei Mitnahmenuten 306 und 308 auf, in die eine Mitnahmenase 310 bzw. 312 des Mitnahmeelements 270 bzw. 272 eingreifen kann, und zwar in der Neutralstellung N der betreffenden Betätigungsstange 258 bzw. 260 bzw. des betreffenden Mitnahmeelements. Die Herstellung des Eingriffs zwischen der Mitnahmenase 310 und der Mitnahmenut 306 bzw. zwischen der Mitnahmenase 312 und der Mitnahmenut 308 ist nur dann durch Verstellung der betreffenden Betätigungsstange 258 bzw. 260 mittels des Zylinders 192 bzw. 194 möglich, wenn die Betätigungsstange aus einer einem eingelegten Gang entsprechenden Axialstellung Gα bzw. Gβ (vgl. gestrichelte Linien Gα und Gβ in Fig. 17) in die Neutralstellung verschoben wird und zwar bei einer der momentanen Schwenkstellung des jeweiligen Mitnahmeelements 270 bzw. 272 entsprechenden Axialstellung der Wählbetätigungsstange 302. Diese Axialstellung ist vermittels des hydraulischen Nehmerzylinders 182e einstellbar.

Vermittels des hydraulischen Nehmerzylinders 182e und der Wählbetätigungsstange 302 lassen sich die beiden Mitnahmeelemente 270 und 272 so schwenken, dass sie einmal die eine, einmal in die andere Schaltstange der beiden jeweils zugeordneten Schaltstangen 262 und 264 bzw. 266 und 268 eingreifen. Wie erläutert, sind die Mitnahmeelemente jeweils nur in der Neutralstellung, also wenn im betreffenden Teilgetriebe kein Gang eingelegt ist, vermittels des hydraulischen Nehmerzylinders 182e und des formschlüssigen Eingriffs zwischen der Mitnehmernase 310 und der Mitnahmenut 306 bzw. der Mitnahmenase 312 und der Mitnahmenut 308 betätigbar. Durch Einlegen eines ausgewählten, der betreffenden Schaltstange zugeordneten Gangs, also durch Verschieben der Schaltstange entweder in die Axialposition Gα oder Gβ, wird der Eingriff zwischen der betreffenden Mitnahmenase und der betreffenden Mitnahmenut wieder aufgehoben. Ist ein Gang eingelegt, so besteht also keine Koppelung mehr zwischen der Wählbetätigungsstange 302 und dem betreffenden Mitnahmeelement 270 bzw. 272. Somit kann dann die Wählbetätigungsstange 302 frei verschoben werden und zur von der momentanen Schwenkposition des betreffenden Mitnahmeelements unabhängigen Verschwenkung des jeweils anderen Mitnahmeelements dienen. Es können also mit nur einer Wählanordnung (hydraulischer Nehmerzylinder 182e mit der die Mitnahmenuten 306 und 308 aufweisenden Wählbetätigungsstange 302) unabhängig voneinander jeweils gewünschte Wählpositiönen der beiden Mitnahmeelemente 270 und 272 eingestellt werden. Dabei sorgt pro Mitnahmeelement die H-förmige Gasse (gate) 290 und 292 und der darin geführte Führungsstift 286 bzw. 288 für eine exakte Führung der Mitnahmeelemente.

Die Verkopplung der Mitnahmeelemente mit der Schaltstange 308 vermittels der Nase 310 und der Nut 306 bzw. vermittels der Nase 312 und der Nut 308 stellt nur eine Möglichkeit von vielen dar. Man kann selbstverständlich auch Mitnahmenasen oder dergleichen an der Schaltstange und zugeordnete Nuten in den Mitnahmeelementen vorsehen. Eine andere Möglichkeit ist, eine permanente Betätigungskraftübertragung zwischen der Schaltstange 302 und den Mitnahmeelementen 270 und 272 vorzusehen, beispielsweise vermittels einer jeweiligen Federanordnung. Die jeweiligen Betätigungskräfte würden aufgrund der Kulisse nur in der jeweiligen Neutralposition N im Sinne einer Verschwenkung des jeweiligen Mitnahmeelements wirksam sein. Soweit die Schaltstangen bzw. die Mitnahmeelemente aus der Neutralposition wegbewegt sind, also sich beispielsweise in der Position Gα bzw. Gβ befinden, würden die Betätigungskräfte durch den die Gassenkulisse 290 bzw. 292 begrenzenden Rand 320 bzw. 322 des Elements 294 bzw. 296 abgestützt werden.

Die Betätigung der Mitnahmeelemente vermittels des hydraulischen Nehmerzylinders 182e und Betätigung der Betätigungsstangen 258 und 260 und damit der Schaltstangen 262, 264 bzw. 266, 268 vermittels der Zylinder 192 und 194 muss - jedenfalls beim Beispiel der Fig. 17 bis 20 - aufeinander abgestimmt erfolgen, um bei einer Verstellung einer jeweiligen Betätigungsstange in die Neutralstellung die Wählbetätigungsstange 302 in einer die Herstellung des Eingriffs zwischen der betreffenden Nase 310 bzw. 312 und der betreffenden Nut 306 bzw. 308 ermöglichenden Axialstellung zu haben. Diese Axialstellung der Wählbetätigungsstange 302, die die Herstellung des Mitnahmeeingriffs mit dem betreffenden Mitnahmeelement ermöglicht, hängt von der momentanen Schwenkstellung des Mitnahmeelements ab. Wäre die Axialstellung der Wählbetätigungsstange 302 nicht auf die momentane Schwenkstellung des betreffenden Mitnahmeelements angepasst, so würde die Mitnahmenase 310 bzw. 312 an der Wählbetätigungsstange anschlagen und dementsprechend die betreffende Betätigungsstange 258 bzw. 260 nicht in die Neutralstellung N verstellbar sein. Eine die benötigten Wähl- und Schaltvorgänge ermöglichende aufeinander abgestimmte Betätigung der doppelt wirkenden Schaltzylinder 192 und 194 einerseits und des einfach wirkenden Wählzylinders 182e andererseits ist aber ohne weiteres möglich, indem eine die Zylinder über entsprechende Ventile (vgl. Fig. 16) ansteuernde Steuereinheit die momentanen Schaltpositionen, Wählpositionen bzw. Betätigungspositionen berücksichtigt. Diese momentanen Positionen können sich aus einer "Buchführung" über die durchgeführten Schaltbewegungen, Wählbewegungen bzw. Betätigungsbewegungen ergeben oder durch eine zugehörige Sensoranordnung erfassbar sein.

Anzumerken ist noch, dass sich durchaus auch beide Betätigungsstangen 258 und 260 gleichzeitig in der Neutralstellung befinden können. Dies entspricht einem Getriebezustand, bei dem in beiden Teilgetrieben kein Gang eingelegt ist. Dabei kann es vorkommen, dass beide Betätigungselemente 270 und 272 gleichzeitig vermittels der Wählbetätigungsstange 302 im gleichen Sinne geschwenkt werden, etwa von einem Eingriff des Betätigungselements 270 mit der Schaltstange 264 in einen Eingriff mit der Schaltstange 262 und des Mitnahmeelements 272 von einem Eingriff mit der Schaltstange 268 in einen Eingriff mit der Schaltstange 266, oder umgekehrt. Man kann demgegenüber aber auch vorsehen, dass zumindest im Zuge normaler Schalt- und Wählvorgänge nur jeweils eines der beiden Mitnahmeelemente 270 und 272 mit der Wählbetätigungsstange 202 momentan gekoppelt und dementsprechend vermittels des Nehmerzylinders 182e schwenkbar ist.

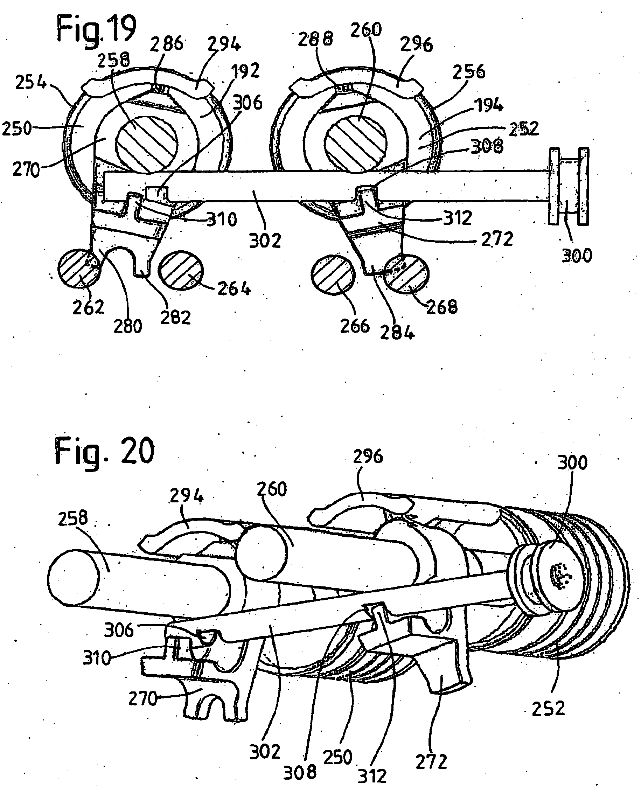

Bezug nehmend auf die Fig. 17 und 19 kann beispielsweise folgende Ausgangslage vorliegen. Der Schaltstange 262 sind die Getriebegänge 4 und 6 zugeordnet. Die Schaltstange 264 sind die Getriebegänge R (Rückwärtsgang) und 2 zugeordnet. Der Schaltstange 266 sind die Getriebegänge 5 und 7 zugeordnet. Der Schaltstange 268 sind die Getriebegänge 1 und 3 zugeordnet. Die Gänge 4, R, 5 und 1 entsprechen beispielsweise der Position Gα und die Gänge 6, 2, 7 und 3 entsprechen beispielsweise der Position Gβ. Entsprechend den Fig. 17 und 19 ist dementsprechend auf der Schaltstange 262 der sechste Gang eingelegt. Auf den anderen Schaltstangen, insbesondere auch auf den anderen Schaltstangen des anderen Teilgetriebes, ist momentan kein Gang eingelegt. Das Mitnahmeelement 270 ist entsprechend der Axialposition Gβ nicht mit der Wählbetätigungsstange 302 gekoppelt. Die andere Betätigungsstange 270 befindet sich hingegen in der Neutralstellung, und das Mitnahmeelement 272 ist dementsprechend mit der Wählbetätigungstange 302 gekoppelt. Kommt jetzt beispielsweise der Schaltwunsch "eingelegten Gang 6 auf der Schaltstange 262 auslegen, dann mittels des Mitnahmeelements 272 auf der Schaltstange 268 den dritten Gang einlegen" auf, so ist beispielsweise der folgende Schaltablauf möglich: Gang 6 kann momentan nicht ausgelegt werden, weil sich die Mitnahmenase 310 und die Mitnahmenut 306 nicht gegenüberliegen. Es ist deswegen die Wählbetätigungsstange 302 axial zu bewegen, so dass die Nase 310 und die Nut 306 einander gegenüberliegen. Der Eingriff zwischen der Nase 312 des anderen Mitnahmeelements 272 und der Nut 308 der Wählbetätigungsstange 302 kann hierbei erhalten bleiben. Mittels des Zylinders 192 kann nun die Betätigungsstange 258 in die Neutralstellung und dementsprechend die Schaltstange 262 in die Neutralstellung bewegt werden, wodurch der sechste Gang ausgelegt wird. Nur sind beide Betätigungsstangen und dementsprechend alle Schaltstangen in der Neutralstellung. Die Wählbetätigungsstange 302 kann nun zurück in die Stellung gemäß Fig. 19 bewegt werden. Die Mitnahmeelement 270 und 272 bzw. deren Führungsstifte 286 und 288 befinden sich nun in den Gassen 1-3 bzw. R-2. Dies ist gleichbedeutend damit, dass der Finger 282 des Mitnahmeelements 270 in die Schaltstange 264 und die Zunge 284 des Mitnahmeelements 272 in die Schaltstange 268 formschlüssig eingreift. Nun kann vermittels des Zylinders 194 die Betätigungsstange 260 in die Stellung Gβ verschoben und damit auf der Schaltstange 268 der dritte Gang eingelegt werden.

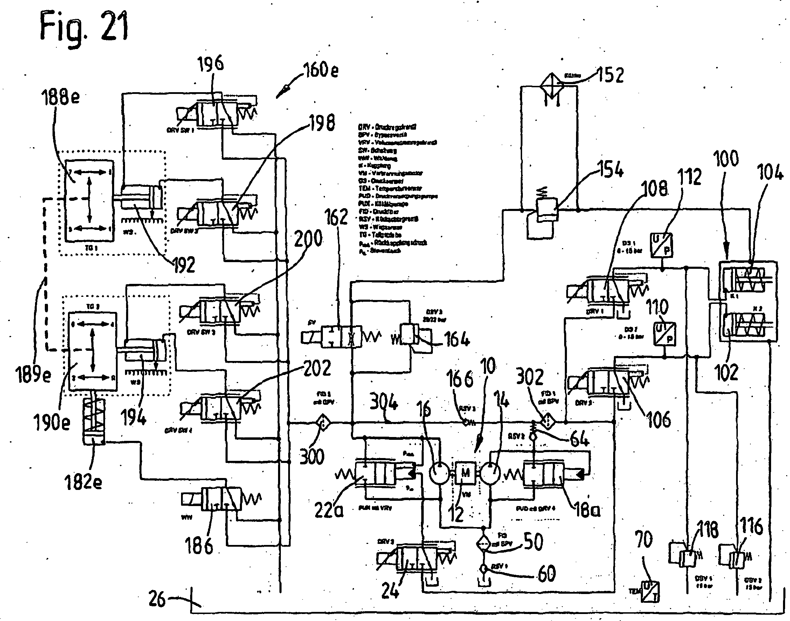

Fig. 21 bis 27 zeigen hydraulische Schaltpläne mit einer jeweiligen Pumpenanordnung 10 in Zuordnung zu einem Getriebe und einer Doppelkupplung. In den hydraulischen Schaltplänen oder/und betreffend die Pumpenanordnung sind jeweils Abwandlungen oder Weiterbildungen gegenüber den hydraulischen Schaltplänen der Fig. 10 bis 16 bzw. den Pumpenanordnungen der Fig. 1 bis 16 realisiert. Es werden hier jeweils nur die Unterschiede gegenüber den jeweils vorangehend schon beschriebenen Anordnungen erläutert, soweit diese hier von Interesse sind.

Das Beispiel der Fig. 21 unterscheidet sich auf den ersten Blick wenig vom Beispiel der Fig. 16. Es ist ein Getriebebetätigungsabschnitt 160e wie bei Fig. 16 vorgesehen, allerdings mit einer etwas anderen Zuordnung der Gänge zu den Gassen und Schaltpositionen. Zum Schaltventil 162 ist das Druckbegrenzungsventil 164 parallel geschaltet. Zwischen dem Hydrauliksystemabschnitt des Getriebebetätigungsabschnitts 160e einerseits und der von der Pumpenanordnung 10 einschließlich der zugehörigen Ventile 18a, 22a und 24 gebildeten Druckölversorgung andererseits ist ein Druckfilter 300 zwischengeschaltet. Ferner ist zwischen der angesprochenen Druckversorgung einerseits und den Steuer/Regel-Ventilen 106, 108 für die Kupplungsbetätigung andererseits ein Druckfilter 302 zwischengeschaltet. Wie auch bei den anderen Filtern (Druckfilter bzw. Saugfilter) der verschiedenen Hydrauliksysteme können die Filter mit einem Bypassventil ausgeführt sein.

Von der Abgabeseite der Druckölpumpe 14 ist das Drucköl über das Rückschlagventil 64 und den Druckfilter 302 den Steuer/Regel-Ventilen 106 und 108 zuführbar. Der Zulauf von der Kühlölpumpe 16 und der Zulauf von der Druckölpumpe 14 sind durch eine Ölleitung 304 miteinander verbunden, im Effekt ähnlich wie bei den Beispielen der Fig. 13 und 16, wobei das Rückschlagventil 166 vorgesehen ist, das vom Zulauf der Kühlölpumpe 16 in Richtung zu den Steuer/Regel-Ventilen 106 und 108 durchlässt, nicht aber vom Zulauf der Druckölpumpe 14 in Richtung zum Hydraulikabschnitt des Getriebebetätigungsabschnitts 160e und zur Kühlölzuführung über das Schaltventil 162 bzw. das Druckbegrenzungsventil 164 in Richtung zur Doppelkupplung 100.

Eine aus dem Diagramm der Fig. 21 alleine nicht ersichtliche Spezialität ist folgende. Die Druckölpumpe 14 ist für eine vergleichsweise kleine Förderleistung ausgelegt und dementsprechend auch baulich klein, während die Kühlölpumpe 16 für eine vergleichsweise große Förderleistung und auch für die Bereitstellung eines vergleichsweise großen Drucks ausgeführt ist. Die Kühlölpumpe 16 ist dafür vorgesehen, bedarfsweise die Druckölpumpe 14 beim Aufbau des benötigten Betätigungsdrucks zu unterstützen. Die Druckölpumpe selbst ist nur dafür vorgesehen, einen schon aufgebauten Betätigungsdruck an der Doppelkupplung 100 aufrecht zu erhalten. Das Fördervolumen der Druckölpumpe 14 ist hierzu dafür ausgelegt, nur etwaige Leckagen an den Drehdurchführungen und Ventilen durch Nachförderung von Drucköl auszugleichen. Der demgegenüber wesentlich größere Ölvolumenstrom, der zum schnellen Befüllen der Betätigungszylinder der Doppelkupplung 100 bzw. zum Betätigen der Getriebeaktuatorik erforderlich ist, wird durch die Kühlölpumpe 16 bereitgestellt.

Letzteres geschieht dadurch, dass das Schaltventil 162 geschlossen wird. Damit steigt der Druck auf der Abgabeseite der Kühlölpumpe 16 an und wird über eine Rückführung zum Ventil 22a (P_{rück}) und den vom Ventil 24 abgegebenen Steuerdruck (pₛₜ) durch das Ventil 22a eingestellt. Das Rückschlagventil 166 macht auf, wenn der Öldruck abgabeseitig der Pumpe 16 grösser als der Öldruck abgabeseitig der Pumpe 14 ist. Damit kann dann der der jeweils zu betätigenden Kupplungsanordnung der Doppelkupplung 100 angeordnete, zu befüllende Betätigungszylinder schnell auf Grundlage des von der Kühlölpumpe 16 bereitgestellten Ölvolumenstroms gefüllt werden. Ist ein gewünschter Betätigungszustand erreicht, wird das Schaltventil 122 wieder geöffnet und die Druckölpumpe 14 übernimmt das "Halten" des momentanen Betätigungsdruckes an der Doppelkupplung 100.

Die Auslegung der verschiedenen Ventile und Steuer- und Betätigungsdrücke ist eine dem Fachmann geläufige Aufgabe. Beispielsweise kann das Ventil 22a so ausgelegt sein, dass die Federkraft von der Kraft infolge der Rückführung p_{rück} erst kompensiert wird, wenn ein Rückführungsdruck p_{rück} größer als 29 bar (beispielsweise p_{rück} = 30 bar) erreicht ist. In Kombination mit einer entsprechenden Auslegung des Druckbegrenzungsventils 164, das zum Schaltventil 162 parallel geschaltet ist, wird so erreicht, dass während einer Schaltung (Schaltventil 162 geschlossen) die Doppelkupplung 100 über das Druckbegrenzungsventil 164 gekühlt werden kann. Ist während einer Schaltung keine Kühlung für die Doppelkupplung erforderlich, so kann über den Steuerdruck pₛₜ (eingestellt über das Druckregelventil 24) eine zusätzliche Kraft auf das Ventil 22a erzeugt werden, so dass dieses Ventil aufmacht und der Druck auf der Abgabeseite der Kühlölpumpe 16 gesenkt wird.

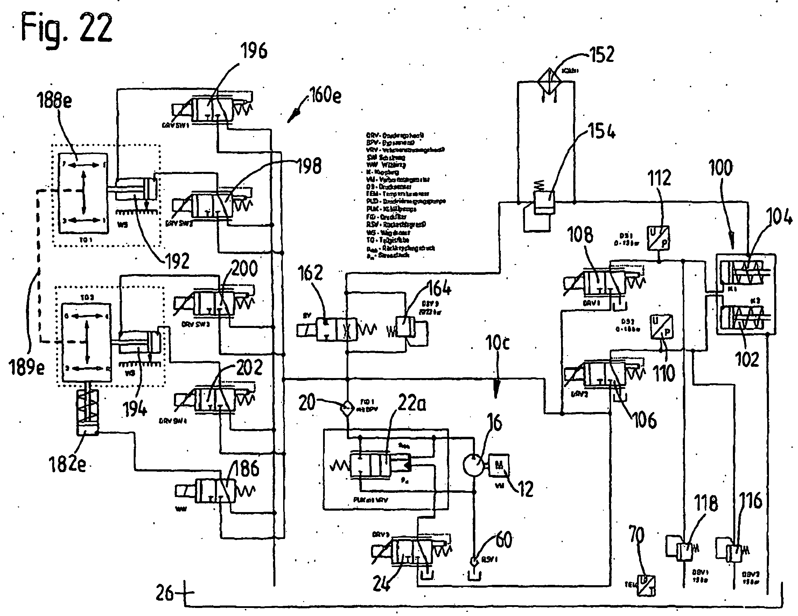

Fig. 22 zeigt eine Ausführungsvariante, bei der die Kupplungs- und Getriebebetätigung und die Kupplungskühlung auf Grundlage einer einzigen Pumpe 16 einer Pumpenanordnung 10c erfolgt. Die Pumpe 16 wird vorzugsweise durch den Verbrennungsmotor 12 angetrieben, wie in der Darstellung der Fig. 22 gezeigt. Zur Einstellung, insbesondere Steuerung oder - vorzugsweise - Regelung des abgabeseitigen Drucks bzw. des abgegebenen Ölvolumenstroms ist das 2/2-Wege-Ventil 22a vorgesehen, das in seiner Funktion den vorangehend erläuterten Ventilen an entsprechender Stelle, etwa dem Ventil 22a oder 18a, entspricht, wobei eine Rückführung des abgabeseitigen Öldrucks an einen. Steuereingang des Ventils 22 wie beim Ventil 22a der Fig. 21 realisiert ist.

Die Einstellung des Versorgungsdrucks wird ähnlich wie beim Beispiel der Fig. 21 durch zwei Ventile erreicht, nämlich durch das auch als Volumenstrom-Regelventil bezeichenbare Ventil 22a und das Schaltventil 162. Das Ventil 22a wird dabei durch den Rückführungsdruck p_{rück} von der Abgabeseite der Pumpe 16 und den Steuerdruck pₛₜ vom Druckregelventil 24 gesteuert. Mit diesem Steuerdruck kann durch entsprechende Ansteuerung des Druckregelventils 24 der benötigte Systemdruck, der für die Ansteuerung der Kupplung oder/und für die Getriebebetätigung benötigt wird, eingestellt werden. Steigt der Systemdruck über einen gewissen Wert, so sorgt der Rückkopplungsdruck prück dafür, dass das Ventil 22 geöffnet wird und so ein weiterer Druckanstieg verhindert wird.

Soll die Getriebeaktuatorik betätigt werden, so wird das elektrisch betätigbare Schaltventil 162 durch entsprechende Ansteuerung geschlossen. Das parallel geschaltete Druckbegrenzungsventil 164 sorgt dafür, dass der Druck einen gewissen Wert nicht übersteigt, wodurch auch für einen gewissen Kühlölstrom in Richtung zur Doppelkupplung 100 gesorgt wird.

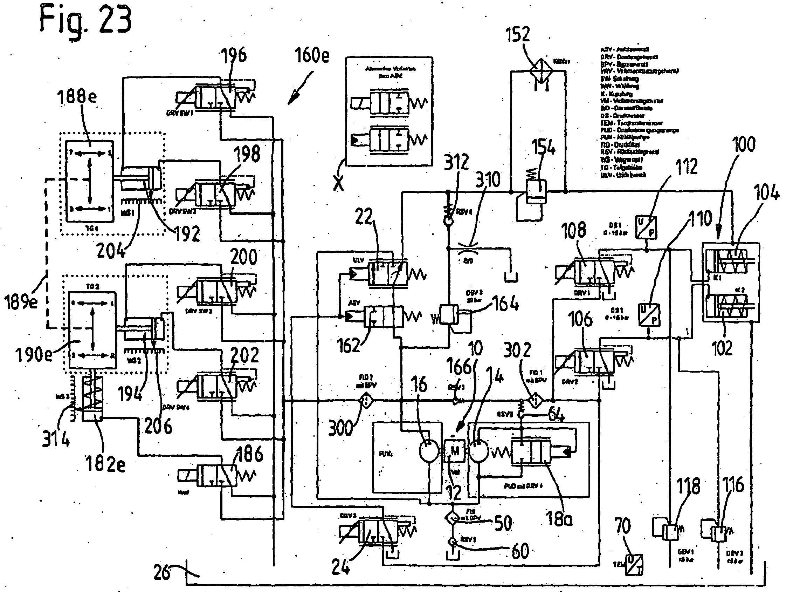

Fig. 23 unterscheidet sich vom Beispiel der Fig. 21 vor allem dadurch, dass anstelle des Ventils 22a das 3/2-Wege-Ventil 22 vorgesehen ist und dass dieses dem Schaltventil 162 in Richtung zur Doppelkupplung 100 nachgeschaltet ist. Das Schaltventil 162 kann als elektrisch betätigbares Ventil ausgeführt sein, wie beim Beispiel der Fig. 21 oder 22 (falls gewünscht - wie dort - mit integrierter Drossel im Durchflusszweig) oder als druckbetätigtes Ventil, wie konkret beim hydraulischen Schaltplan der Fig. 23 realisiert. Falls gewünscht, kann man eine Drossel in den Durchflusszweig des druckangetriebenen Schaltventils vorsehen. Die beiden angesprochenen Ausführungsvarianten in Bezug auf das Schaltventil 162 sind durch entsprechende Schaltsymbole in der Subfigur X repräsentiert.

Betreffend die besonders bevorzugte Ausführungsvariante, dass das auch als "Aufstauventil" bezeichenbare Schaltventil 162 ebenso wie das Ventil 22 als druckangesteuertes Ventil ausgeführt ist, ist insbesondere auf die folgende vorteilhafte Ausführungsmöglichkeit hinzuweisen. Beide Ventile können über das gemeinsam zugeordnete Druck-Steuer/Regel-Ventil 24 angesteuert werden, wobei das' Schaltventil 162 und das Ventil 22 vorteilhaft auf unterschiedlichen Druckniveaus arbeiten können Beispielsweise könnte das Druck-Steuer/Regelventil Drücke zwischen 0 und 10 bar einstellen. Das den Volumenstrom bzw. den Abgabedruck einstellende Ventil 22 könnte dann im Druckbereich von 0 bis 8 bar arbeiten und innerhalb dieses Druckbereichs den Volumenstrom zur Kupplung bzw. zum Ölreservoir (Tank) bzw. zur Ansaugseite der Pumpe 16 proportional zum anstehenden Druck oder gemäß einer vorgegebenen Kennlinie steuern. Das Ventil 22 wirkt dabei als eine Art Stromleiter. Stellt das Ventil 24 einen höheren Druck im Bereich von 9 bis 10 bar ein, schliesst das Aufstauventil 162, so dass ein Druck erzeugt wird, der zum Betätigen der Getriebeaktuatorik ausreicht. Die vorstehend erwähnten Druckwerte haben rein exemplarischen (beispielhaften) Charakter Die gewünschten unterschiedlichen Arbeitsdruckniveaus lassen sich einfach mithilfe unterschiedlicher Federvorspannung der Ventilschieber der Ventile 22 und 162 einstellen.

Die Kühlpumpe 16 wird im Aufstaufall in der Regel immer mehr Öl fördern als für die Getriebeschaltung erforderlich ist. Das überschüssige Öl wird über das Druckbegrenzungsventil 164 abgeleitet und zum Teil für die Kühlung der Doppelkupplung 100 verwendet. Wie in Fig. 23 gezeigt, kann man dem Druckbegrenzungsventil 164 eine zum Tank führende Blende 310 und ein zur Doppelkupplung führendes Rückschlagventil 312 nachschalten. Die Blende 310 und das Rückschlagventil 312 sind dabei vorzugsweise so ausgelegt, dass ein Teil des überschüssigen Öls zurück in den Tank geleitet wird und ein anderer Teil zur Kühlung der Kupplung verwendet wird. Das Rückschlagventil 312 hat speziell die Aufgabe, ein Abfliessen von Kühlöl, das durch das Ventil 22 in Richtung zur Kupplung 100 fliesst, in Richtung zum Tank zu verhindern.

Betreffend den Getriebebetätigungsabschnitt 160e ist noch darauf hinzuweisen, dass dem Betätigungszylinder (Gassenwahlzylinder) 182e ein Weggeber 314 zugeordnet ist.

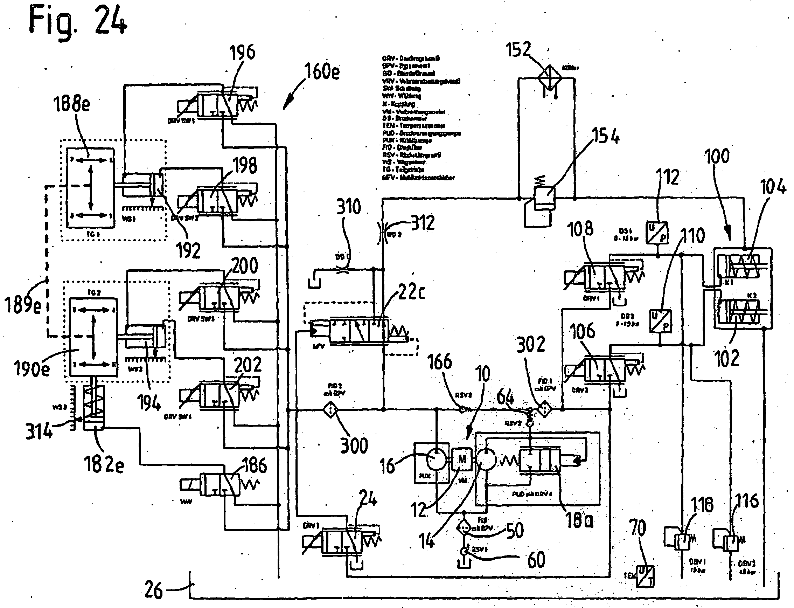

Die Ausführungsvariante der Fig. 24 unterscheidet sich von der Ausführungsvariante der Fig. 23 vor allem dadurch, dass anstelle des 3/2-Wege-Steuer/Regel-Ventils 22 und des Aufstauventils 162 ein 3/3-Wege-Multifunktionsventil 22c vorgesehen ist, das die Funktionen des Aufstauventils 162 und des "Umleitventils" 22 darstellt. In einem unteren Ansteuerdruckbereich arbeitet das Ventil 22c als Stromteiler, der entsprechend dem Ansteuerdruck des Ventils 24 das Öl zur Kupplung bzw. zum Tank/Ansaugtrakt der Kühlölpumpe 16 leitet. Es sei allgemein darauf hingewiesen, dass es gleichwertig ist, das Öl direkt zu einem Ansaugeingang der Kühlölpumpe (oder betreffend die Druckölversorgung mittels der Druckölpumpe 14 zu einem Ansaugeingang der Druckölpumpe) zurück zu leiten oder in ein bzw. das Ölreservoir des Hydrauliksystems, das in Flussverbindung, insbesondere Ansaugverbindung, mit dem Ansaugeingang der betreffenden Pumpe steht.

In einem oberen Druckbereich des Ansteuerdrucks vom Ventil 24 wirkt das Ventil 22c als Aufstauventil. Über eine Rückkopplung wird der aufgestaute Druck auf den Schieber des Ventils 22c rückgekoppelt und so eine Maximaldruckbegrenzung erreicht. Insoweit erfüllt das Ventil 22c auch die Funktion des Druckbegrenzungsventils 164 mit. Die Blenden 310 und 312 sind so ausgelegt, dass dann, wenn sich das Ventil 22c zwischen seiner Aufstau- und Tankweiterleitungsposition befindet, noch ein gewisser Volumenstrom zur Kühlung der Kupplung über die Blende 312 in Richtung zur Doppelkupplung 100 schließt.

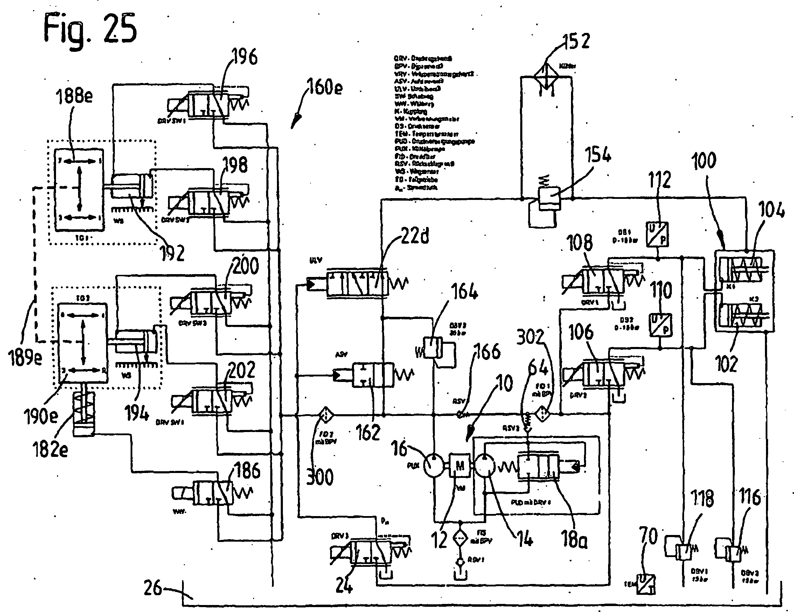

Eine weitere Ausführungsvariante zur Lösung gemäß Fig. 23 ist in Fig. 25 gezeigt. Anstelle des 3/2-Wege-Ventils 22 ist ein 3/3-Wege-Ventil 22d ähnlich wie das Ventil 22c der Fig. 24 vorgesehen, das allerdings keine Druckbegrenzungsfunktion aufgrund einer Druckrückkopplung realisiert. Dem Ventil 22d ist das Schalt- oder Aufstauventil 162 vorgeschaltet, das gemeinsam mit dem Ventil 22d durch den Steuerdruck des Ventils 24 angesteuert wird. Dem Aufstauventil 162 ist das Druckbegrenzungsventil 164 parallel geschaltet.

Eine geeignete Abstimmung der Ventile aufeinander, etwa vermittels einer entsprechenden Abstimmung der Federn der Ventilschieber aufeinander, sieht beispielsweise wie folgt aus. Wird z. B. durch das Druck-Steuer/RegelVentil 24 ein Druck von 0 bis 15 bar bereitgestellt, so können die Ventile 22d, 162 und 164 beispielsweise derart ausgelegt sein, dass das Ventil 22d zwischen 0 und 8 bar den Volumenstrom zur Kupplung bzw. zum Tank steuert. In einem darüber liegenden Druckbereich von beispielsweise 9 bis 10 bar tritt das Schaltventil 162 in Aktion und lässt kein Öl zu dem Ventil 22d passieren. Ein unzulässig hoher Druck wird durch das Druckbegrenzungsventil 464 vermieden, indem dieses bei Überschreitung einer Druckschwelle öffnet. Das durch das Druckbegrenzungsventil 164 durchgelassene Öl gelangt dann zum Ventil 22d und kann dann beispielsweise bei einem Steuerdruck im Bereich von 9 bis 10 bar wieder in den Tank geleitet werden. Erhöht man jedoch den Steuerdruck am Steuer/Regel-Ventil 22d (und damit auch am Schaltventil 162) auf ein Niveau von beispielsweise 11 bis 15 bar, so kann mithilfe der dritten Stellung des Ventils 22d eine Steuerung des Volumenstroms zum Tank bzw. der Kupplung erreicht werden, auf Grundlage des über das Druckbegrenzungsventil 164 zugeführten Ölvolumenstroms. Das Schaltventil 162 bleibt dabei geschlossen.

Die Steuerung des Volumenstroms zum Tank bzw. zur Doppelkupplung ist insbesondere dann sinnvoll, wenn häufig geschaltet, also die Getriebeaktuatorik häufig betätigt wird und dementsprechend entsprechend oft bzw. andauernd mittels des Schaltventils 162 Öl zum Druckaufbau aufgestaut werden muss, so dass ohne die Ölzufuhr über das Druckbegrenzungsventil 164 und die dritte Stellung des Ventils 22d vergleichsweise wenig Kühlöl zur Doppelkupplung gelangen würde.

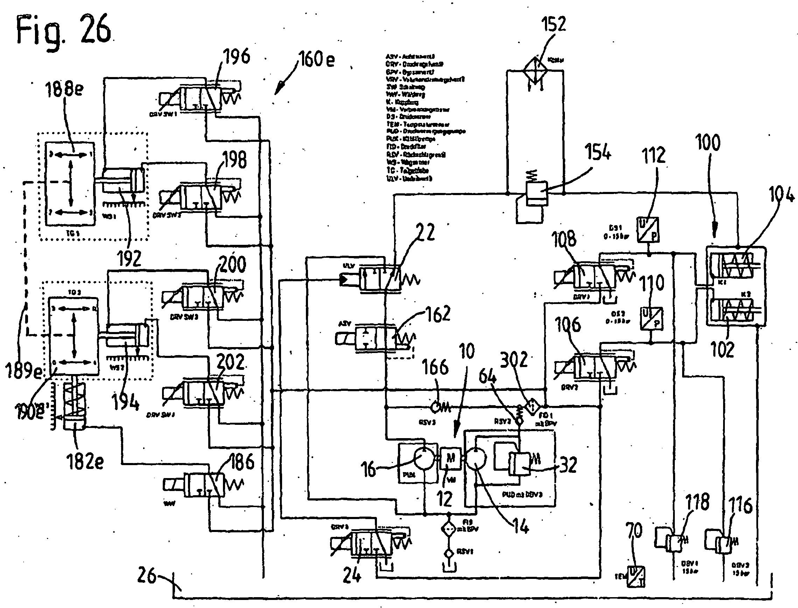

Eine weitere Ausführungsvariante der Lösung gemäß Fig. 23 ist in Fig. 26 gezeigt. Bei der Lösung gemäß Fig. 26 ist das Aufstauventil 162 kein durckgesteuertes, sondern ein elektrisch angesteuertes Ventil. Der Vorteil eines elektrischen Aufstauventils liegt vor allem in der Reaktionszeit des Ventils. Gemäß Fig. 26 wird das Aufstauventil 62 auf elektrischem Wege direkt angesteuert, wohingegen gemäß Fig. 23 das dortige Aufstauventil 122 indirekt über das Ventil 24 angesteuert wird. Der Vorteil des hydraulisch betätigbaren Aufstauventils gemäß Fig. 23 liegt in einem gewissen Kostenvorteil gegenüber der elektrischen Lösung.

Zur Pumpenanordnung 10 der Fig. 26 ist noch darauf hinzuweisen, dass der Druckölpumpe 14 anstelle des Ventils 18a gemäß Fig. 23 ein Druckbegrenzungsventil 32 zugeordnet ist. Gegenüber der Lösung der Fig. 5 ist das dortige Ventil 18 weggefallen. Der abgabeseitige Druck der Druckölpumpe 14 ist somit durch die Auslegung des Druckbegrenzungsventils 32 fest eingestellt.

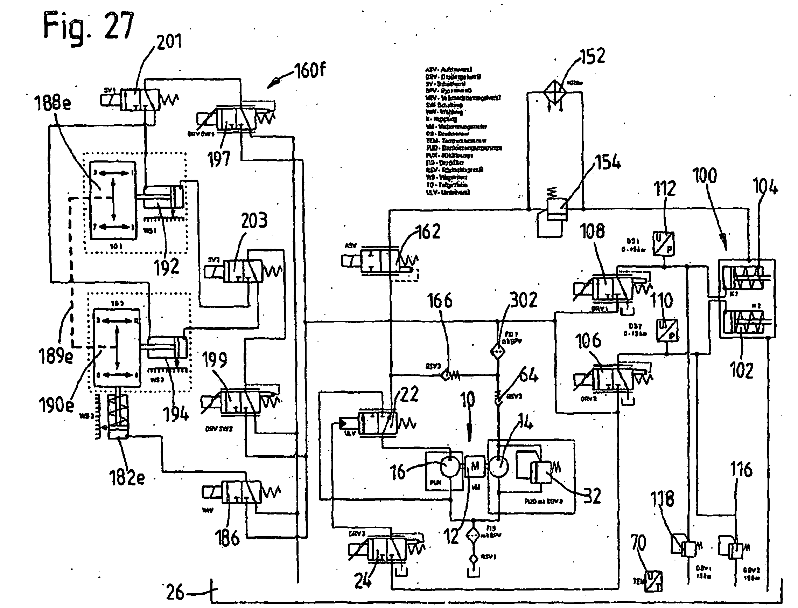

Das Beispiel der Fig. 27 kann als Abwandlung des Beispiels der Fig. 26 angesehen werden. Während gemäß Fig. 26 das Umleitventil 22 dem Aufstauventil 162 nachgeschaltet ist, ist gemäß Fig. 27 das Umleitventil 22 dem Aufstauventil 162 vorgeschaltet, also zwischen der Druckölpumpe 16 und dem Aufstauventil 162 angeordnet. Das Umleitventil 22 könnte beispielsweise direkt an der Pumpe 16 angeordnet oder in diese integriert sein. Der Vorteil der Lösung gemäß Fig. 27 ist, dass Strömungsverluste, die durch das Umpumpen des Kühlöls durch längere Leitungen entstehen, vermieden oder zumindest vermindert werden.

Hinzuweisen ist noch auf den anders gestalteten Getriebebetätigungsabschnitt 160f. Die Auslegung oder Ausgestaltung des Hydraulikabschnitts des Getriebebetätigungsabschnitts 160f entspricht im Wesentlichen dem Beispiel der Fig. 12, mit dem Unterschied, dass den beiden Gassenmechaniken 188e und 190e ein gemeinsamer Nehmerzylinder 182e zugeordnet ist, wobei als Betätigungsanordnung beispielsweise die Lösung der Fig. 17 bis 20 realisiert sein könnte.

Allgemein ist noch auf Folgendes hinzuweisen. Die verschiedenartigen Pumpenanordnungen 10 und 10b gemäß den Fig. 10 bis 16 und 21 bis 27 sind untereinander austauschbar und überdies jeweils durch die andersartigen Pumpenanordnungen 10 gemäß den Fig. 1 bis 9 ersetzbar.

Ferner kann bei allen Beispielen entweder nur ein Saugfilter für die Pumpe bzw. Pumpen oder nur ein Druckfilter für die Pumpe bzw. Pumpen oder sowohl ein Saugfilter und ein Druckfilter für die Pumpe bzw. Pumpen verwendet werden. Maßgeblich ist hier die Empfindlichkeit der verwendeten Ventile auf im Öl mitgeführte Verunreinigungen.

In Abweichung von den Beispielen der Fig. 14 und 15 kommt es durchaus auch in Betracht, als Kühlölpumpe eine elektromotorisch angetriebene Pumpe und als Druckölpumpe eine verbrennungsmotorisch angetriebene Pumpe zu verwenden. Ferner kommt es durchaus in Betracht, sowohl für die Kühlölpumpe als auch für die Druckölpumpe eine elektromotorisch angetriebene Pumpe einzusetzen. Eine weitere Möglichkeit ist, eine sowohl der Kühlölversorgung als auch der Druckölversorgung dienende Pumpe anstelle von insgesamt zwei Pumpen einzusetzen (vgl. Fig. 22), die verbrennungsmotorisch oder elektromotorisch angetrieben sein kann.

Die Beispiele der Fig. 10 bis 16 und 21 bis 27 und ebenso die Beispiele der Fig. 1 bis 9 ermöglichen einen recht guten Wirkungsgrad betreffend die Bereitstellung des Drucköls für die hydraulische Getriebebetätigung, insbesondere im Vergleich zu herkömmlichen Automatgetrieben, bei denen unterschiedliche Druckniveaus durch verschiedene Druckminderventile auf Grundlage eines von einer Pumpe erzeugten, dementsprechend recht hohen Öldrucks bereitgestellt werden. Letzteres bedeutet, dass die betreffende Pumpe immer mehr Öl bei einem hohen Druck erzeugen muss, wodurch ein vergleichsweise schlechter Wirkungsgrad erreicht wird. Anzumerken ist ferner noch, dass mittels einer verbrennungsmotorisch angetriebenen Pumpe ohne gesonderte Massnahmen eine Start-Stopp-Fähigkeit nicht gegeben ist. Diese kann z. B. auf einfache Weise mit einer elektrohydraulischen Druckversorgung erreicht werden, wie dies bei den Beispielen der Fig. 14 und 15 der Fall ist.

Bei den Beispielen der Fig. 10 bis 16 wurde davon ausgegangen, dass die Pumpenanordnung 10 bzw. 10b bzw. 10c, die gemäß den vorstehend gegebenen Hinweisen durchaus völlig anders ausgeführt sein kann als in den Figuren gezeigt, sowohl für die Druckversorgung zur Kupplungsbetätigung als auch zur Druckversorgung für die Getriebebetätigung dient. Die betreffende Pumpenanordnung kann, ebenso wie im Prinzip die Pumpenanordnungen der Fig. 1 bis 9, auch alleine zur Druckölversorgung für die Getriebebetätigung oder alleine für die Druckölversorgung für die Kupplungsbetätigung dienen. Die verschiedenartigen Ausgestaltungen der Getriebebetätigungsabschnitte 160, 160c, 160d, 1 60e und 160f sind überdies völlig unabhängig von der Art und Weise der Druckölbereitstellung von Interesse.

## Patentansprüche

1. Kraftfahrzeug-Antriebsstrang, umfassend eine Antriebseinheit (12), ein Getriebe und ein Kupplungssystem mit einer zwischen der Antriebseinheit und dem Getriebe angeordneten Kupplungseinrichtung (100) zur Momentenübertragung zwischen der Antriebseinheit und dem Getriebe, wobei die Kupplungseinrichtung wenigstens eine unter Vermittlung von Druckmedium betätigbare, für einen Betrieb unter Einwirkung eines Betriebsmediumsvargesehene Kupplungsanordnung (102, 104) aufweist,
wobei auf Grundlage einer Pumpenanordnung (10; 10b)
i) das Druckmedium für die Betätigung der Kupplunganordnung (102,104) bereitstellbar ist und
ii) der Kupplungseinrichtung (100) für den Betrieb unter Einwirkung des Betriebsmediums Betriebsmedium zuführbar ist,
**dadurch gekennzeichnet,**
**dass** das Getriebe mittels einer zugeordneten Aktuatorik (160d) unter Vermittlung von Druckmedium betätigbar ist und dass auf Grundlage der Pumpenanordnung (10; 10b; 10c) das Druckmedium für die Betätigung des Getriebes bereitstellbarist, wobei die Aktuatorik (160d) unter Verzicht auf eine Gassenauswahlmechanik derart ausgebildet ist, dass alle Schaltstangen des Getriebes durch einen eigenen Nehmerzylinder (192-1, 192-2, 194-1, 194-2) betätigbar sind, wobei die Nehmerzylinder zur Verstellung einerjeweiligen Schaltstange in einerAxialrichtung mit Druck beaufschlagbar sind, und
wobei das Druckmedium ein Hydrauliköl ist, das auch als Betriebs medium dient, und wobei die Pumpenanordnung (10) umfasst:
eine durch die Antriebseinheit (12) antreibbare Pumpe (16), deren Eingangsseite und Ausgangsseite über eine zugeordnete Steuer/Regel-Ventilanordnung (22) verbindbar ist, um durch Rückführung von Medium von der Ausgangsseite zur Eingangsseite einen Soll-Volumenstrom an Medium an der Ausgangsseite oder einer ausgangsseitigen Abgabestelle oder/und das Druckmedium auf der Ausgangsseite oder an der ausgangsseitigen Abgabestelle auf einem Soll-Druck bereitzustellenwobei die Pumpe sowohl als Druckmediumpumpe (16) zur Bereitstellung des Mediums als Druckmedium für die Betätigung der Kupplungsanordnung als auch als Betriebsmediumpumpe (16) zur Bereitstellung des Mediums als Betriebsmedium für die Zufuhr zur Kupplungseinrichtung dient.

2. Antriebsstrang nach Anspruch 1, **dadurch gekennzeichnet, dass** die Pumpenanordnung (10; 10b) wenigstens eine vorzugsweise durch die Antriebseinheit (12) antreibbare Pumpe (14, 16; 16) umfasst.

3. Antriebsstrang nach Anspruch 1 oder 2, **dadurch gekennzeichnet, dass** eine Eingangsseite und eine Ausgangsseite der Pumpenanordnung bzw. der Pumpe über eine Steuer/Regel-Ventilanordnung (18, 22; 18a, 22a; 22a) verbindbar ist, um durch Rückführung von Medium von der Ausgangsseite zur Eingangsseite das Medium auf der Ausgangsseite oder an einer ausgangsseitigen Abgabestelle auf einem Soll-Druck bereitzustellen, oder/und durch Rückführung von Medium von der Ausgangsseite zur Eingangsseite einen Soll-Volumenstrom an Medium an der Ausgangsseite oder der ausgangsseitigen Abgabestelle bereitzustellen.

4. Antriebsstrang nach einem der Ansprüche 1 bis 3, **dadurch gekennzeichnet, dass** die einen ausgangsseitigen Mediumdruck an einem Steuereingang empfangende Steuer/Regel-Ventilanordnung (22) als Druckbegrenzungsventil betreibbar ist

5. Antriebsstrang nach wenigstens einem der Ansprüche 1 bis 4, **dadurch gekennzeichnet, dass** die Druckmediumpumpe (14) dafür ausgelegt ist, einen momentanen Haltedruck zum Halten eines momentanen Betätigungszustands der Kupplungsanordnung (102,104) bereitzustellen, erforderlichenfalls unter Ausgleich etwaiger Druckmediumverluste durch Nachförderung von Druckmedium, und dass die Kupplungsanordnung (102, 104) auf Grundlage von durch die Betriebsmediumpumpe (16) bereitgestelltem Betriebsmedium, das als Druckmedium für die Kupplungsbetätigung und ggf. für die Getriebebetätigung dient, von einem unbetätigten In einen betätigten Zustand überführbar ist.

6. Antriebsstrang nach Anspruch 5, **gekennzeichnet durch** eine der Betriebsmediumpumpe (16) oder Pumpe (16) ausgangsseitig nachgeschaltete Aufstaustufe (162) zur Bereitstellung des Betriebsmediums bzw. Druckmediums auf einem für die Getriebebetätigung bzw. Kupplungsbetätigung hinreichenden Druckniveau, wobei die Aufstaustufe vorzugsweise wenigstens ein verstellbares Ventil (162) oder/und wenigstens eine Drossel umfasst.

7. Antriebsstrang nach einem der Ansprüche 1 bis 6, **dadurch gekennzeichnet, dass** die Steuer/Regel-Ventilanordnung (18; 18a; 22; 22a) wenigstens ein elektrisch oder-vorzugsweise - auf Grundlage eines daran anliegenden Steuer/Regeldrucks ansteuerbares Steuer/Regel-Ventil (18; 18a; 18, 28; 18a, 28; 22, 24; 22a, 24) umfasst.

8. Antriebsstrang nach Anspruch 7, **dadurch gekennzeichnet, dass** ein ausgangsseitiger Mediumdruck, insbesondere der Druckmediumdruck bzw. Betriebsmediumdruck auf der Ausgangsseite oder an der Abgabestelle der Druckmediumpumpe bzw. Betriebsmediumpumpe, an dem bzw. an einem Steuer/ Regel-Ventil (18; 18a) als Steuer/Regeldruck angelegt oder anlegbar ist, um den Volumenstrom oder/und Druck des Mediums, insbesondere Druckmediums bzw. Betriebsmediums, zu steuern oder zu regeln.

9. Antriebsstrang nach Anspruch 7 oder 8, **dadurch gekennzeichnet, dass** aus einem ausgangsseitigen Mediumdruck, insbesondere aus dem Druckmediumdruck auf der Ausgangsseite oder an der Abgabestelle der Druckmediumpumpe, mittels wenigstens eines weiteren, elektrisch ansteuerbaren Steuer/Regel-Ventils (24; 28) der Steuer/Regeldruck erzeugbar ist, der an dem bzw. an einem Steuer/Regel-Ventil (18; 18a; 22; 22a) angelegt oder anlegbar ist, um den Volumenstrom oder/und Druck des Mediums, insbesondere den Volumenstrom des Betriebsmediums bzw. den Druck des Druckmediums, zu steuern oder zu regeln.

10. Antriebsstrang nach einem der Ansprüche 7 bis 9, **dadurch gekennzeichnet, dass** ein ausgangsseitiger Mediumdruck, insbesondere der Druckmediumdruck bzw. Betriebsmediumdruck auf der Ausgangsseite oder an der Abgabestelle der Druckmediumpumpe bzw. Betriebsmediumpumpe, an dem bzw. an einem Steuer/RegelVentil (18; 18a) als Steuer/Regeldruck angelegt oder anlegbar ist, um eine Druckbegrenzungsfunktion durch bedarfsweises Öffnen der Verbindung zwischen der Eingangsseite und der Ausgangsseite vorzusehen.

11. Antriebsstrang nach einem der Ansprüche 1 bis 10, **gekennzeichnet durch** wenigstens ein Druckbegrenzungsventil (32), über das bedarfsweise eine Rückführverbindung zwischen Eingangsseite und Ausgangsseitefreigebbarist, um eine Druckbegrenzungsfunktion vorzusehen.

12. Antriebsstrang nach einem der Ansprüche 1 bis 11, **gekennzeichnet durch** wenigstens einen ausgangsseitig der Pumpenanordnung angeordneten, vorzugsweise in die Pumpeneinheit integrierten Drucksensor (30).

13. Antriebsstrang nach einem dervorhergehenden Ansprüche, **dadurch gekennzeichnet, dass** die Kupplungsanordnung (102, 104) eine nasslaufende Kupplungsanordnung ist, dass der Betrieb unter Einwirkung des Betriebsmediums ein nasslaufender Betrieb ist und dass das Betriebsmedium eine Betriebsflüssigkeit, ggf. ein Kühlflüssigkeit, ist.

14. Antriesstrang nach einem der vorhergehenden Ansprüche, **dadurch gekennzeichnet, dass** die Kupplungsanordnung (102, 104) als Lamellen-Kupplungsanordnung ausgebildet ist.

15. Antriebsstrang nach einem dervorhergehenden Ansprüche, **dadurch gekennzeichnet, dass** das Druckmedium ein hydraulisches Druckmedium, insbesondere ein Hydrauliköl ist, das ggf. auch als Betriebsflüssigkeit oder Kühlflüssigkeit dient.

16. Antriebsstrang nach einem der vorhergehenden Ansprüche, **dadurch gekennzeichnet, dass** die Kupplungseinrichtung (100) als Mehrfach-Kupplungseinrichtung, insbesondere Doppel-Kupplungseinrichtung (100), ausgeführt ist und eine erste Kupplungsanordnung (102), der wenigstens ein erster Nehmerzylinder (102) zugeordnet ist, und eine zweite Kupplungsanordnung (104), der wenigstens ein zweiter Nehmerzylinder (104) zugeordnet ist, aufweist, wobei den beiden Nehmerzylindem unabhängig voneinander von der Pumpenanordnung (10; 10b) bereitgestelltes Medium als Druckmedium zuführbar ist.

## Claims

1. Motor vehicle drivetrain, comprising a drive unit (12), a transmission and a clutch system having a clutch device (100), which is arranged between the drive unit and the transmission, for transmitting torque between the drive unit and the transmission, with the clutch device having at least one clutch arrangement (102, 104) which can be actuated with the aid of pressure medium and which is provided for operation under the action of an operating medium,
wherein, by means of a pump arrangement (10; lOb),
i) the pressure medium for the actuation of the clutch arrangement (102, 104) can be provided and
ii) the clutch device (100) can be supplied with operating medium for operation under the action of the pressure medium,
**characterized**
**in** the can be actuated with the aid of pressure medium by means of an associated actuating arrangement (160; 160c; 160d; 160e; 160f), and in that, by means of the pump arrangement (10; 10b; 10c), the pressure medium for the actuation of the transmission can be provided, with the actuating arrangement (160d) being designed, without a gate selector mechanism, in such a way that all the shift rods of the transmission can be actuated by means of a respective separate slave cylinder (192-1, 192-2, 194-1, 194-2), wherein the slave cylinders can be pressurized in order to adjust a respective shift rod in an axial direction, and wherein the pressure medium is a hydraulic oil which also serves as operating medium, and wherein the pump arrangement (10) comprises:
a pump (16) which can be driven by the drive unit (12) and whose inlet side and outlet side can be connected by means of an associated control/regulating valve arrangement (22) in order to provide a nominal volume flow of medium at the outlet side or at an outlet-side discharge point by recirculating medium from the outlet side to the inlet side, and/or to provide the pressure medium on the outlet side or at the outlet-side discharge point at a nominal pressure, wherein the pump serves both as a pressure medium pump (16) for providing the medium as a pressure medium for the actuation of the clutch arrangement, and also as an operating medium pump (16) for providing the medium as an operating medium for the supply to the clutch device.

2. Drivetrain according to Claim 1, **characterized in that** the pump arrangement (10; 10b) comprises at least one pump (14, 16; 16) which can be driven preferably by the drive unit (12).

3. Drivetrain according to Claim 1 or 2, **characterized in that** an inlet side and an outlet side of the pump arrangement or of the pump can be connected by means of a control/regulating valve arrangement (18, 22; 18a, 22a; 22a) in order to provide the medium on the outlet side or at an outlet-side discharge point at a nominal pressure by recirculating medium from the outlet side to the inlet side, and/or to provide a nominal volume flow of medium at the outlet side or the outletside discharge point by recirculating medium from the outlet side to the inlet side.

4. Drivetrain according to one of Claims 1 to 7, **characterized in that** the control/regulating valve arrangement (22), which receives an outlet-side medium pressure at a control input, can be operated as a pressure limiting valve.

5. Drivetrain according to one of Claims 1 to 4, **characterized in that** the pressure medium pump (14) is designed to provide a present holding pressure for holding a present actuation state of the clutch arrangement (102, 104), if required while compensating any pressure medium losses by means of a top-up of pressure medium, and **in that** the clutch arrangement (102, 104) can be moved from a non-actuated into an actuated state by means of operating medium which is provided by the operating medium pump (16) and which serves as the pressure medium for the clutch actuation and if appropriate for the transmission actuation.

6. Drivetrain according to Claim 5, **characterized by** an accumulation stage (162), which is connected downstream of the operating medium pump (16) or pump (16) at the outlet side, for providing the operating medium or pressure medium at a pressure level which is sufficient for the transmission actuation or clutch actuation, with the accumulation stage preferably comprising at least one adjustable valve (162) and/or at least one throttle.

7. Drivetrain according to one of Claims 1 to 6, **characterized in that** the control/regulating valve arrangement (18; 18a; 22; 22a) comprises at least one control/regulating valve (18; 18a; 18, 28; 18a, 28; 22, 24; 22a, 24) which can be activated electrically or - preferably - on the basis of a control/regulating pressure which is applied thereto.

8. Drivetrain according to Claim 7, **characterized in that** an outlet-side medium pressure, in particular the pressure medium pressure or operating medium pressure at the outlet side or at the discharge point of the pressure medium pump or operating medium pump, is or can be applied to the or to a control/regulating valve (18; 18a) as a control/regulating pressure in order to control or regulate the volume flow and/or pressure of the medium, in particular pressure medium or operating medium.

9. Drivetrain according to Claim 7 or 8, **characterized in that** the control/regulating pressure, which is or can be applied to the or to a control/regulating valve (18; 18a; 22; 22a) in order to control or regulate the volume flow and/or pressure of the medium, in particular the volume flow of the operating medium or the pressure of the pressure medium, can be generated from an outlet-side medium pressure, in particular from the pressure medium pressure at the outlet side or at the discharge point of the pressure medium pump, by means of at least one further, electrically activatable control/regulating valve (24; 28) .

10. Drivetrain according to one of Claims 7 to 9, **characterized in that** an outlet-side medium pressure, in particular the pressure medium pressure or operating medium pressure on the outlet side or at the discharge point of the pressure medium pump or operating medium pump, is or can be applied to the or to a control/regulating valve (18; 18a) as a control/regulating pressure in order to provide a pressure-limiting function by means of on-demand opening of the connection between the inlet side and the outlet side.

11. Drivetrain according to one of Claims 1 to 10, **characterized by** at least one pressure-limiting valve (32), by means of which a recirculation connection between the inlet side and the outlet side can be opened on demand in order to provide a pressure limiting function.

12. Drivetrain according to one of Claims 1 to 11, **characterized by** at least one pressure sensor (30) which is arranged at the outlet side of the pump arrangement, preferably integrated into the pump unit.

13. Drivetrain according to one of the preceding claims, **characterized in that** the clutch arrangement (102, 104) is a wet-running clutch arrangement, **in that** the operation under the action of the operating medium is a wet-running operation, and **in that** the operating medium is an operating liquid, if appropriate a cooling liquid.

14. Drivetrain according to one of the preceding claims, **characterized in that** the clutch arrangement (102, 104) is designed as a multiplate clutch arrangement.

15. Drivetrain according to one of the preceding claims, **characterized in that** the pressure medium is a hydraulic pressure medium, in particular a hydraulic oil which if appropriate also serves as operating liquid or cooling liquid.

16. Drivetrain according to one of the preceding claims, **characterized in that** the clutch device (100) is designed as a multiple clutch device, in particular dual clutch device (100), and has a first clutch arrangement (102), which is assigned at least one first slave cylinder (102), and a second clutch arrangement (104), which is assigned at least one second slave cylinder (104), wherein medium which is provided by the pump arrangement (10; 10b) can be supplied as pressure medium to the two slave cylinders independently of one another.

## Revendications

1. Train de transmission d'un véhicule automobile, comprenant une unité d'entraînement (12), une boîte de vitesses et un système d'embrayage avec un dispositif d'embrayage (100) disposé entre l'unité d'entraînement et la boîte de vitesses pour le transfert de couple entre l'unité d'entraînement et la boîte de vitesses, le dispositif d'embrayage présentant au moins un agencement d'embrayage (102, 104) pouvant être actionné par l'intermédiaire de fluide sous pression, prévu pour fonctionner sous l'effet d'un fluide de travail,
dans lequel,
par le biais d'un agencement de pompe (10 ; 10b),
i) le fluide sous pression peut être fourni pour actionner l'agencement d'embrayage (102, 104), et
ii) le dispositif d'embrayage (100) peut être alimenté en fluide de travail pour le fonctionnement sous l'effet du fluide de travail,
**caractérisé en ce**
la peut être actionnée au moyen d'un système d'actionneurs (160 ; 160c ; 160d ; 160e ; 160f) par l'intermédiaire de fluide sous pression et en ce que, par le biais de l'agencement de pompe (10 ; 10b ; 10c), le fluide sous pression peut être fourni pour l'actionnement de la boîte de vitesses, le système d'actionneurs (160d) étant réalisé en se passant d'un mécanisme de sélection de voie, de telle sorte que toutes les tringles de changement de vitesse de la boîte de vitesses puissent être actionnées par un cylindre récepteur propre (192-1, 192-2, 194-1, 194-2), les cylindres récepteurs pouvant être sollicités en pression dans une direction axiale pour le déplacement d'une tringle de changement de vitesse respective, et
dans lequel le fluide sous pression est une huile hydraulique qui sert également de fluide de travail, et dans lequel l'agencement pompe (10) comprend :
une pompe (16) pouvant être entraînée par l'unité d'entraînement (12), dont le côté d'entrée et le côté de sortie peuvent être connectés par le biais d'un agencement de soupape de commande/régulation associé (22), afin de fournir un débit volumique de fluide au niveau du côté de la sortie ou d'un point de décharge du côté de la sortie par recirculation de fluide depuis le côté de la sortie vers le côté de l'entrée et/ou afin de fournir le fluide sous pression du côté de la sortie ou au niveau du point de décharge du côté de la sortie à une pression de consigne, la pompe servant à la fois de pompe pour le fluide sous pression (16) pour fournir le fluide en tant que fluide sous pression pour l'actionnement de l'agencement d'embrayage et de pompe de fluide de travail (16) pour fournir le fluide en tant que fluide de travail pour l'alimentation au dispositif d'embrayage.

2. Train de transmission selon la revendication 1, **caractérisé en ce que** l'agencement de pompe (10 ; 10b) comprend au moins une pompe (14, 16 ; 16) de préférence pouvant être entraînée par l'unité d'entraînement (12).

3. Train de transmission selon la revendication 1 ou 2, **caractérisé en ce qu'**un côté d'entrée et un côté de sortie de l'agencement de pompe ou de la pompe peuvent être connectés par le biais d'un agencement de soupape de commande/régulation (18, 22 ; 18a, 22a ; 22a), afin de fournir le fluide au côté de sortie ou à un point de décharge du côté de sortie, à une pression de consigne, par recirculation du fluide du côté de la sortie vers le côté de l'entrée, et/ou afin de fournir un débit volumique de consigne de fluide au niveau du côté de la sortie ou du point de décharge du côté de la sortie, par recirculation de fluide du côté de la sortie vers le côté de l'entrée.

4. Train de transmission selon l'une quelconque des revendications 1 à 7, **caractérisé en ce que** l'agencement de soupape de commande/régulation (22) recevant une pression de fluide du côté de la sortie au niveau d'une entrée de commande peut fonctionner en tant que soupape de limitation de pression.

5. Train de transmission selon l'une quelconque des revendications 1 à 4, **caractérisé en ce que** la pompe de fluide sous pression (14) est conçue de manière à fournir une pression de maintien momentanée pour maintenir un état d'actionnement momentané de l'agencement d'embrayage (102, 104), et au besoin en compensant des pertes éventuelles de fluide sous pression en réalimentant du fluide sous pression, et **en ce que** l'agencement d'embrayage (102, 104) peut être transféré d'un état non actionné dans un état actionné par le biais de fluide de travail fourni par la pompe de fluide de travail (16), lequel sert de fluide sous pression pour l'actionnement de l'embrayage et éventuellement pour l'actionnement de la boîte de vitesses.

6. Train de transmission selon la revendication 5, **caractérisé par** un étage d'augmentation (162) monté en aval du côté de la sortie après la pompe de fluide de travail (16) ou la pompe (16), pour fournir le fluide de travail ou le fluide sous pression à un niveau de pression suffisant pour l'actionnement de la boîte de vitesses ou l'actionnement de l'embrayage, l'étage d'augmentation comprenant de préférence au moins une soupape réglable (162) et/ou au moins un étranglement.

7. Train de transmission selon l'une quelconque des revendications 1 à 6, **caractérisé en ce que** l'agencement de soupape de commande/régulation (18 ; 18a ; 22 ; 22a) comprend au moins une soupape de commande/régulation (18 ; 18a ; 18, 28 ; 18a, 28 ; 22, 24 ; 22a, 24) pouvant être commandée électriquement ou de préférence par le biais d'une pression de commande/régulation qui lui est appliquée.

8. Train de transmission selon la revendication 7, **caractérisé en ce qu'**une pression de fluide du côté de la sortie, notamment la pression de fluide sous pression ou la pression de fluide de travail est appliquée ou peut être appliquée du côté de la sortie ou au niveau du point de décharge de la pompe de fluide sous pression ou de la pompe de fluide de travail, à la ou à une soupape de commande/régulation (18 ; 18a) en tant que pression de commande/régulation, afin de commander ou de réguler le débit volumique et/ou la pression du fluide, en particulier du fluide sous pression ou du fluide de travail.

9. Train de transmission selon la revendication 7 ou 8, **caractérisé en ce qu'**à partir d'une pression de fluide du côté de la sortie, en particulier à partir de la pression de fluide sous pression du côté de la sortie ou au niveau du point de décharge de la pompe de fluide sous pression, au moyen d'au moins une autre soupape de commande/régulation commandable électriquement (24 ; 28), on peut produire la pression de commande/régulation qui est ou peut être appliquée à la ou à une soupape de commande/régulation (18 ; 18a ; 22 ; 22a), afin de commander ou de réguler le débit volumique et/ou la pression du fluide, en particulier du débit volumique du fluide de travail ou la pression du fluide sous pression.

10. Train de transmission selon l'une quelconque des revendications 7 à 9, **caractérisé en ce qu'**une pression de fluide du côté de la sortie, en particulier la pression de fluide sous pression ou la pression de fluide de travail, au niveau du côté de la sortie ou au niveau du point de décharge de la pompe de fluide sous pression ou de la pompe de fluide de travail, est ou peut être appliquée en tant que pression de commande/régulation à la ou à une soupape de commande/régulation (18 ; 18a) afin de prévoir une fonction de limitation de pression par ouverture, en fonction des besoins, de la connexion entre le côté d'entrée et le côté de sortie.

11. Train de transmission selon l'une quelconque des revendications 1 à 10, **caractérisé par** au moins une soupape de limitation de pression (32), par le biais de laquelle, au besoin, une connexion de recirculation entre le côté d'entrée et le côté de sortie peut être libérée afin de prévoir une fonction de limitation de la pression.

12. Train de transmission selon l'une quelconque des revendications 1 à 11, **caractérisé par** au moins un capteur de pression (30) disposé du côté de la sortie de l'agencement de pompe, de préférence intégré de préférence dans l'unité de pompe.

13. Train de transmission selon l'une quelconque des revendications précédentes, **caractérisé en ce que** l'agencement d'embrayage (102, 104) est un agencement d'embrayage humide, **en ce que** le fonctionnement sous l'effet du fluide de travail est un fonctionnement humide et **en ce que** le fluide de travail est un liquide de travail, éventuellement un liquide de refroidissement.

14. Train de transmission selon l'une quelconque des revendications précédentes, **caractérisé en ce que** l'agencement d'embrayage (102, 104) est réalisé sous forme d'agencement d'embrayage à disques.

15. Train de transmission selon l'une quelconque des revendications précédentes, **caractérisé en ce que** le fluide sous pression est un fluide sous pression hydraulique, en particulier une huile hydraulique, qui sert éventuellement aussi de liquide de travail ou de liquide de refroidissement.

16. Train de transmission selon l'une quelconque des revendications précédentes, **caractérisé en ce que** le dispositif d'embrayage (100) est réalisé sous forme de dispositif d'embrayage multiple, en particulier de dispositif d'embrayage double (100), et présente un premier agencement d'embrayage (102), auquel est associé au moins un premier cylindre récepteur (102), et un deuxième agencement d'embrayage (104), auquel est associé au moins un deuxième cylindre récepteur (104), les deux cylindres récepteurs pouvant recevoir, indépendamment l'un de l'autre, du fluide fourni par l'agencement de pompe (10 ; 10b), en tant que fluide sous pression.
